# EUROPEAN PATENT APPLICATION

(11) **EP 4 693 697 A1**
(43) Date of publication of application: **11.02.2026**
(21) Application number: 24887346.5
(22) Date of filing: 21.05.2024
(51) Int. Cl.: H01M 50/528, H01M 50/531, H01M 50/553, H01M 10/04

(54) **BATTERY CELL AND MANUFACTURING METHOD THEREFOR, BATTERY, AND ELECTRICAL APPARATUS**

(30) Priority: 08.11.2023 CN 202311482125
(71) Applicant: Contemporary Amperex Technology Co., Limited, Ningde, Fujian 352100 (CN)
(72) Inventor: WU, Kai, Ningde, Fujian 352100 (CN); LUO, Huaen, Ningde, Fujian 352100 (CN); LIN, Wenfa, Ningde, Fujian 352100 (CN); CHEN, Congsheng, Ningde, Fujian 352100 (CN)
(74) Representative: Ran, Handong
(86) International application number: PCT/CN2024/094503
(87) International publication number: WO 2025/097722

(57) **Abstract**

A battery cell and a manufacturing method therefor, a battery, and an electrical apparatus. The battery cell comprises a casing and an electrode assembly; the casing is provided with a pole; the electrode assembly is arranged inside the casing and comprises an active substance coating portion and a tab, and the tab and the pole are connected by means of welding and form a welding mark; the welding mark comprises a first welding seam and a second welding seam, the second welding seam is located on one side of the first welding seam in the width direction and partially overlaps with the first welding seam, and the maximum thickness of the first welding seam is less than the maximum thickness of the second welding seam. According to the technical solution in the embodiments of the present application, the first welding seam is formed on one side of the second welding seam in the width direction, and the first welding seam is used, so that on one hand, the probability that welding cracks occur in a plurality of layers of tab pieces of the tab can be effectively reduced, and the overcurrent temperature rise is reduced, thereby reducing the probability of thermal runaway of the electrode assembly due to excessive temperature rise; on the other hand, the anti-stripping strength of the welding mark on the tab can be increased, and the reliability of the battery cell is significantly improved.

## Description

### CROSS-REFERENCE TO RELATED APPLICATIONS

The present application claims priority to and benefits of Chinese Patent Application No. 202311482125.8, filed on November 8, 2023. The entire content of the above-referenced application is incorporated herein by reference.

### TECHNICAL FIELD

The present application relates to the field of batteries, and specifically, to a battery cell, a preparation method therefor, a battery, and a power consuming apparatus.

### BACKGROUND

Energy conservation and emission reduction are the key to the sustainable development of the automobile industry. Electric vehicles, with their advantages of energy conservation and environmental protection, have emerged as an important component for the sustainable development of the automobile industry. For the electric vehicles, a battery technology is also an important factor related to the development of the electric vehicles.

When a tab and a terminal of a battery cell in the related technology are connected, a formed weld is prone to break off, resulting in poor reliability of the battery cell.

### SUMMARY

In view of the foregoing problem, the present application provides a battery cell, a battery, and a power consuming apparatus, to reduce a probability that foreign matters enter the interior of the battery cell, thereby improving reliability of the battery cell.

According to a first aspect, the present application provides a battery cell, including a housing and an electrode assembly. The housing is provided with a terminal. The electrode assembly is arranged in the housing. The electrode assembly includes an active material coating portion and a tab connected to the active material coating portion. The tab and the terminal are connected through welding to form a weld mark. The weld mark includes a first weld and a second weld. The second weld is located on a side of the first weld in a width direction of the first weld and partially overlaps with the first weld. A maximum thickness of the first weld is less than a maximum thickness of the second weld.

In the technical solution of embodiments of the present application, because an edge of the second weld is prone to undergo a crack to affect connection strength of the weld mark, the first weld is formed on a side of the second weld in a width direction of the second weld. By using the first weld, a probability that a plurality of layers of tab pieces of the tab undergo a weld crack can be effectively reduced, and an overcurrent temperature increase can be reduced, so that a probability that the electrode assembly undergoes a thermal runaway due to an excessively large temperature increase can be reduced. In addition, anti-peeling strength of the weld mark on the tab can be increased, thereby significantly improving reliability of the battery cell.

In some embodiments, a ratio of the maximum thickness of the first weld to a thickness of the tab ranges from 0.8 to 1.2. In the foregoing technical solution, the ratio of the maximum thickness of the first weld to the thickness of the tab is limited in the foregoing range. In this way, welding power when the first weld is formed can be reduced, a thermal input when the first weld is formed can be reduced, and a risk that the plurality of layers of tab pieces of the tab break off can be reduced. In addition, impact of a thermal input on the plurality of layers of tab pieces at the position when the second weld is formed can be reduced, a proportion of a thermal crack undergone by the plurality of layers of tab pieces can be further reduced, and quality of welding the tab and the terminal can be improved, thereby improving the reliability of the battery cell.

In some embodiments, the ratio of the maximum thickness of the first weld to the thickness of the tab ranges from 0.8 to 1. In the foregoing technical solution, the ratio of the maximum thickness of the first weld to the thickness of the tab is limited in the foregoing range. In this way, the quality of welding the tab and the terminal can be improved, thereby improving the reliability of the battery cell.

In some embodiments, a width of the first weld ranges from 0.5 mm to 3.0 mm. In the foregoing technical solution, the width of the first weld is limited to satisfying the foregoing condition, so that the first weld can partially overlap with the second weld in the width direction. In this way, when a puddle of the second weld contracts, the plurality of layers of tab pieces at the first weld are not affected, thereby further reducing the proportion of the thermal crack undergone by the plurality of layers of tab pieces, and improving reliability of an electrical connection between the terminal and the tab.

In some embodiments, the maximum thickness of the second weld is greater than the thickness of the tab, to cause the second weld to pass through the tab and the first weld in a thickness direction of the second weld and extend into the terminal. In the foregoing technical solution, the maximum thickness of the second weld is limited to being greater than the thickness of the tab, so that the puddle of the second weld can pass through the tab and extend into the terminal. After the puddle of the second weld solidifies, the tab and the terminal can be connected together, to implement the electrical connection between the tab and the terminal. Because the thermal input formed by the second weld has little impact on the plurality of layers of tab pieces at the first weld, the proportion of the thermal crack undergone by the plurality of layers of tab pieces can be reduced, and the quality of welding the tab and the terminal can be improved, thereby improving the reliability of the battery cell.

In some embodiments, a width of the second weld is greater than twice the width of the first weld. In the foregoing technical solution, the width of the second weld is limited to satisfying the foregoing condition, so that the first weld can partially overlap with the second weld in the width direction, and an edge of the puddle of the second weld is located inside a puddle of the first weld. In this way, when the puddle of the second weld contracts, the plurality of layers of tab pieces at the first weld are not affected, thereby further reducing the proportion of the thermal crack undergone by the plurality of layers of tab pieces, and improving the reliability of the electrical connection between the terminal and the tab.

In some embodiments, the weld mark further includes a third weld. The third weld and the second weld are respectively located on two opposite sides of the first weld in the width direction of the first weld. The third weld partially overlaps with the first weld. A maximum thickness of the third weld is less than the thickness of the tab. In the foregoing technical solution, the third weld is arranged, so that a micro weld crack of the plurality of layers of tab pieces at an edge of the first weld can be repaired, and strength of the welding connection between the tab and the terminal can also be greatly improved.

In some embodiments, a ratio of the maximum thickness of the third weld to the thickness of the tab ranges from 0.5 to 0.8. In the foregoing technical solution, the ratio of the maximum thickness of the third weld to the thickness of the tab is limited in the foregoing range. In this way, welding power when the third weld is formed can be reduced, a thermal input when the third weld is formed can be reduced, and the risk that the plurality of layers of tab pieces of the tab break off can be reduced. In addition, the micro weld crack generated by the first weld can be better repaired, the proportion of the thermal crack undergone by the plurality of layers of tab pieces can be further reduced, and the quality of welding the tab and the terminal can be improved, thereby improving the reliability of the battery cell.

In some embodiments, the maximum thickness of the third weld is less than the maximum thickness of the first weld. In the foregoing technical solution, the maximum thickness of the third weld is limited to being less than the maximum thickness of the first weld, and welding at large power is transitioned to welding at small power. In this way, the micro weld crack of the plurality of layers of tab pieces at the edge of the puddle of the first weld can be repaired, the probability that the plurality of layers of tab pieces of the tab undergo the weld crack can be effectively reduced, and the overcurrent temperature increase can be reduced, so that the probability that the electrode assembly undergoes the thermal runaway due to the excessively large temperature increase can be reduced. In addition, the anti-peeling strength of the weld mark on the tab can be increased, thereby significantly improving the reliability of the battery cell.

In some embodiments, a width of the third weld ranges from 0.5 mm to 2.0 mm. In the foregoing technical solution, the width of the third weld is limited to satisfying the foregoing condition, so that the third weld can partially overlap with the first weld in the width direction. In this way, when a puddle of the third weld contracts, the plurality of layers of tab pieces at the first weld are not affected, thereby further reducing the proportion of the thermal crack undergone by the plurality of layers of tab pieces, and improving the reliability of the electrical connection between the terminal and the tab.

In some embodiments, each of the first weld, the second weld, and the third weld includes a plurality of weld parts. The plurality of weld parts are arranged and connected in a length direction of the corresponding weld. The plurality of weld parts are arranged and connected in the length direction of the corresponding weld, so that a continuous weld can be formed, thereby improving quality of welding, and further improving the reliability of the battery cell.

In some embodiments, the first weld is separately provided on two opposite sides of the second weld in a width direction of the second weld. The second weld and the third weld are respectively provided on two opposite sides of each of first welds in the width direction of the first weld. In the foregoing technical solution, compared with a manner of welding the tab and the terminal of the battery cell in the related technology, in the present application, when the tab is peeled or pulled, peeling force undergone by a plurality of layers of tab pieces at a part connected to the puddle of the third weld may be converted into shear force, thereby greatly improving the strength of the welding connection between the tab and the terminal.

In some embodiments, an accommodating portion is provided on the terminal. The tab at least partially extends into the accommodating portion to be connected to the terminal through welding. A hollow structure of the accommodating portion can reduce a weight of the terminal to a certain extent, to improve gravimetric energy density of the battery cell and a battery. In addition, the tab can be accommodated in the accommodating portion, to improve assembly efficiency of the tab, further reduce space occupied by the tab, and fully use space of the battery cell, so that both matching between a bracket and the terminal and matching between the bracket and the tab are tighter and more reliable, and a structure of the battery cell is more compact, thereby helping improve energy density of the battery cell.

In some embodiments, the accommodating portion includes a first accommodating groove. A surface on a side of the terminal facing the active material coating portion is a terminal inner end surface. A notch of the first accommodating groove is formed on the terminal inner end surface. The tab is at least partially accommodated in the first accommodating groove. In the foregoing technical solution, the first accommodating groove is provided on the terminal to reduce the weight of the terminal to a certain extent, to improve the gravimetric energy density of the battery cell and the battery. In addition, because the notch of the first accommodating groove is formed on the terminal inner end surface, and the terminal inner end surface is the surface on the side of the terminal close to the active material coating portion, the first accommodating groove may open in a direction facing the active material coating portion, to facilitate extension of the tab into the first accommodating groove, and improve the assembly efficiency. In addition, the first accommodating groove in this form is easy to be processed, thereby improving production efficiency.

In some embodiments, the accommodating portion includes a second accommodating groove. A surface on a side of the terminal away from the active material coating portion is a terminal outer end surface. A notch of the second accommodating groove is formed on the terminal outer end surface. The second accommodating groove is in communication with the interior of the housing through a via hole. The tab passes through the via hole and is at least partially accommodated in the second accommodating groove. In the foregoing technical solution, the second accommodating groove is provided on the terminal to reduce the weight of the terminal to a certain extent, to improve the gravimetric energy density of the battery cell and the battery. In addition, because the notch of the second accommodating groove is formed on the terminal outer end surface, and the terminal outer end surface is the surface on the side of the terminal away from the active material coating portion, the second accommodating groove may open in a direction away from the active material coating portion. In this way, when the tab is at least partially accommodated in the second accommodating groove, the tab can be easily accommodated and arranged through the notch of the second accommodating groove, and an electrical connection operation and the like may be easily performed on the tab and the terminal through the notch of the second accommodating groove, thereby reducing production difficulty of the battery cell, and improving production efficiency of the battery cell.

In some embodiments, the housing includes a housing cover and a housing body provided with an opening. The housing cover covers the opening. The terminal is arranged on the housing cover and/or a wall of the housing body opposite to the opening. In the foregoing technical solution, the terminal is arranged on the housing cover, so that a mounting step of the terminal can be simplified; and a structure of a die can be simplified, and a size of the die can be reduced, thereby helping reduce costs. The terminal is arranged on the wall of the housing body opposite to the opening, to improve structural strength of the housing body, and facilitate the connection between the tab and the terminal after the electrode assembly is assembled in the housing body, thereby helping improve the production efficiency.

According to a second aspect, the present application provides a battery, including the battery cell in the foregoing embodiments.

In the technical solution of the embodiments of the present application, the foregoing battery cell is used, so that an overcurrent temperature increase can be reduced, and a probability of occurrence of a thermal runaway can be reduced, thereby improving reliability of the battery.

According to a third aspect, the present application provides a power consuming apparatus, including the battery in the foregoing embodiments.

In the technical solution of the embodiments of the present application, the foregoing battery is used, so that reliability of the power consuming apparatus can be improved.

According to a fourth aspect, the present application provides a method for preparing a battery cell, including the following steps: providing a housing and an electrode assembly, where the housing is provided with a terminal, and the electrode assembly includes an active material coating portion and a tab connected to the active material coating portion; assembling the electrode assembly into the housing; and welding the tab and the terminal, to form a first weld and a second weld, where the second weld is located on a side of the first weld in a width direction and partially overlaps with the first weld, and a maximum thickness of the first weld is less than a maximum thickness of the second weld.

In the technical solution of the embodiments of the present application, because an edge of the second weld is prone to undergo a crack to affect connection strength of the weld mark, the first weld is formed on a side of the second weld in a width direction of the second weld. By using the first weld, a probability that a plurality of layers of tab pieces of the tab undergo a weld crack can be effectively reduced, and an overcurrent temperature increase can be reduced, so that a probability that the electrode assembly undergoes a thermal runaway due to an excessively large temperature increase can be reduced. In addition, anti-peeling strength of the weld mark on the tab can be increased, thereby significantly improving reliability of the battery cell.

In some embodiments, the second weld is formed after the first weld. In a process of welding the tab to the terminal, the first weld is first formed, and then the second weld is formed. Because the maximum thickness of the first weld first formed is less than the maximum thickness of the second weld then formed, welding power when the first weld is formed is less than welding power when the second weld is formed, and welding at large power is gradually transitioned to welding at small power. In this way, the probability that the plurality of layers of tab pieces of the tab undergo the weld crack can be effectively reduced, and the overcurrent temperature increase can be reduced, so that the probability that the electrode assembly undergoes the thermal runaway due to the excessively large temperature increase can be reduced. In addition, the anti-peeling strength of the weld mark on the tab can be increased, thereby significantly improving the reliability of the battery cell.

In some embodiments, a third weld is further formed when the tab and the terminal are welded, and the third weld is formed after the first weld, where the third weld and the second weld are respectively located on two opposite sides of the first weld in the width direction of the first weld, the third weld partially overlaps with the first weld, and a thickness of the third weld is less than a thickness of the tab. In the foregoing technical solution, the third weld is arranged, so that a micro weld crack of the plurality of layers of tab pieces at an edge of the first weld can be repaired, and strength of the welding connection between the tab and the terminal can also be greatly improved.

The foregoing descriptions are merely an overview of the technical solutions in the present application. In order that technical means of the present application can be understood more clearly so that the technical solutions can be implemented according to content of the descriptions, and in order that the foregoing and other objectives, features, and advantages of the present application can be understood more clearly, specific embodiments of the present application are described below.

### BRIEF DESCRIPTION OF THE DRAWINGS

Various other advantages and benefits will become apparent to a person of ordinary skill in the art upon reading the following detailed description of the preferred embodiments. The accompanying drawings are only for the purpose of illustrating the preferred embodiments and are not construed as limiting the present application. In addition, in all the accompanying drawings, same components are indicated by same reference numerals. In the accompanying drawings:
FIG. 1 is a schematic structural diagram of a vehicle according to some embodiments of the present application;
FIG. 2 is an exploded view of a battery according to some embodiments of the present application;
FIG. 3 is a three-dimensional view of a battery cell according to some embodiments of the present application;
FIG. 4 is a cross-sectional view of a structure of a battery cell according to some embodiments of the present application;
FIG. 5 is a schematic diagram of a partial structure of a battery cell according to some embodiments of the present application;
FIG. 6 is a schematic diagram of welding a tab and a terminal of the battery cell shown in FIG. 5;
FIG. 7 is a bottom view of the structure shown in FIG. 6;
FIG. 8 is a schematic diagram of welding a tab and a terminal of the battery cell shown in FIG. 5;
FIG. 9 is a bottom view of the structure shown in FIG. 8;
FIG. 10 is a schematic diagram of welding a tab and a terminal of the battery cell shown in FIG. 5;
FIG. 11 is a bottom view of the structure shown in FIG. 10;
FIG. 12 is a schematic diagram of a partial structure of a battery cell according to some other embodiments of the present application;
FIG. 13 is a schematic diagram of welding a tab and a terminal of the battery cell shown in FIG. 12;
FIG. 14 is a partial cross-sectional view of a battery cell according to some embodiments of the present application;
FIG. 15 is a partial cross-sectional view of a battery cell according to some embodiments of the present application;
FIG. 16 is a partial cross-sectional view of a battery cell according to some embodiments of the present application;
FIG. 17 is a partial cross-sectional view of a battery cell according to some embodiments of the present application;
FIG. 18 is a partial cross-sectional view of a battery cell according to some embodiments of the present application; and
FIG. 19 is a flowchart of preparing a battery cell according to some embodiments of the present application.

Reference numerals in the specific embodiments are as follows:
Power consuming apparatus 1000, battery 100, controller 200, motor 300,
first direction Z, second direction X, third direction Y, axial direction R of a terminal,
battery cell 10,
box 20, first part 201, second part 202,
housing 11, housing body 111, opening 1110, housing cover 112, mounting hole 113,
terminal 12, positive terminal 1201, negative terminal 1202, accommodating portion 121, first accommodating groove 12110, first end wall 12111, first sink groove 12112, first side wall 12113, second accommodating groove 12120, second end wall 12121, second sink groove 12122, second side wall 12123, via hole 12130, terminal inner end surface 122, terminal outer end surface 123, first groove 126, spacer portion 127, cover plate 13, first conductive member 131, second groove 1311, second conductive member 132,
electrode assembly 2, active material coating portion 21, tab 22,
weld mark 23, first weld 231, second weld 232, third weld 233,
bracket 3, through hole 314, insulating member 4, explosion-proof valve 6, and groove cover 7.

### DETAILED DESCRIPTION

The embodiments of the technical solutions of the present application will be described in detail below with reference to the accompanying drawings. The following embodiments are only used to illustrate the technical solutions of the present application more explicitly, and are thus only interpreted as examples, rather than used to limit the protection scope of the present application.

Unless otherwise defined, meanings of all technical and scientific terms used in this specification are the same as those usually understood by a person skilled in the art to which the present application belongs. Terms used in this specification are only intended to describe purposes of the specific embodiments, but are not intended to limit the present application. In the specification and claims of the present application and the foregoing description of the accompanying drawings, the terms "include", "have", and any variant thereof are intended to cover a non-exclusive inclusion.

In the description according to the embodiments of the present application, the technical terms "first", "second", and the like are only used to distinguish different objects, and should not be understood as indicating or implying relative importance or implying the number, specific order, or primary and secondary relationship of indicated technical features. In the description according to the embodiments of the present application, "a plurality of" means two or more, unless otherwise explicitly and specifically defined.

"Embodiment" mentioned in this specification means that particular features, structures, or characteristics described with reference to the embodiment may be included in at least one embodiment of the present application. The term appearing at different positions of this specification may not refer to the same embodiment or an independent or alternative embodiment that is mutually exclusive with another embodiment. It shall be explicitly and implicitly understood by a person skilled in the art that the embodiments described herein may be combined with other embodiments.

In the description of the embodiments of the present application, the term "and/or" is only an association to describe the associated objects. It can mean that there are three kinds of relationships, such as A and/or B, which means that A exists alone, A and B exist at the same time, and B exists alone. In addition, the character "/" in this specification generally indicates an "or" relationship between the associated objects.

In the description of the embodiments of the present application, the term "a plurality of" means two or more (including two). Similarly, "a plurality of groups" means two or more groups (including two groups), and "a plurality of pieces" means two or more pieces (including two pieces).

In the description of the embodiments of the present application, the directions or positional relationships indicated by the technical terms such as "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", and "circumferential", are only for the convenience of describing the embodiments of the present application and simplifying the description, rather than indicating or implying that the involved apparatus or element should have a specific orientation or should be configured or operated in the specific orientation, therefore, they cannot be understood as limiting the embodiments of the present application.

In the description of the embodiments of the present application, unless otherwise explicitly specified and defined, the technical terms such as "mount", "connect", "connection", and "fix" should be understood in a broad sense. For example, the connection may be a fixed connection, a detachable connection, or an integral connection; or the connection may be a mechanical connection or an electrical connection; or the connection may be a direct connection, an indirect connection through an intermediate medium, internal communication between two elements, or an interaction relationship between two elements. For a person of ordinary skill in the art, the specific meanings of the foregoing terms in the embodiments of the present application may be interpreted according to specific situations.

Nowadays, from the perspective of development of the market situation, the power batteries are applied increasingly. The power batteries are not only used in energy storage power systems such as water power plant, fire power plant, wind power plant and solar power plant, but also in electric transportations such as electric bicycles, electric motorcycles, electric vehicles, as well as in military equipment, aerospace and other fields. With continuous expansion of the application fields of the power batteries, market demands for the power batteries are also expanding.

In a battery cell in the related technology, tabs are usually first pre-welded together through ultrasonic welding, and then the pre-welded tabs are welded to terminals through laser welding.

However, a material of the tab has limitation, for example, a material of an aluminum tab has a large linear expansion coefficient and poor flowability, and a fused aluminum material does not fill a gap in time and also contracts. Consequently, a connection between a puddle and a part of the aluminum foil material of the tab is disconnected, a current path from the tab to the terminal is interrupted, overcurrent and internal resistance are increased, and an overcurrent temperature increase is increased, causing an electrode assembly to undergo a thermal runaway due to the excessively large temperature increase. In addition, strength of a weld obtained after the tab and the terminal are laser-welded is low. Therefore, the weld is prone to be pulled, causing an increase in a weld crack. In severe cases, the weld completely breaks off and falls off at an edge of the weld, resulting in poor reliability of the battery cell.

To improve reliability of a battery cell, after an electrode and a tab of a battery cell in the present application are welded, a weld mark including at least a first weld and a second weld is formed, and the first weld is used as a backing weld and partially overlaps with the second weld. This can effectively reduce a proportion of a crack after the tab and a terminal are laser-welded, increase anti-peeling strength of the weld mark on the tab, and reduce a probability that the battery cell undergoes a thermal runaway, thereby improving the reliability of the battery cell.

The battery cell disclosed in the embodiments of the present application can be used in a power consuming apparatus using a battery as a power supply or various energy storage systems using batteries as energy storage elements. The power consuming apparatus may be, but is not limited to a mobile phone, a tablet computer, a notebook computer, an electric toy, an electric tool, an electric bicycle, an electric vehicle, a ship, a spacecraft, or the like. The electric toy may include a fixed or mobile electric toy, for example, a game console, an electric vehicle toy, an electric ship toy, or an electric aircraft toy. The spacecraft may include an aircraft, a rocket, a space shuttle, a spaceship, or the like.

For ease of description, the following embodiment is described by using an example in which a power consuming apparatus 1000 in an embodiment of the present application is a vehicle.

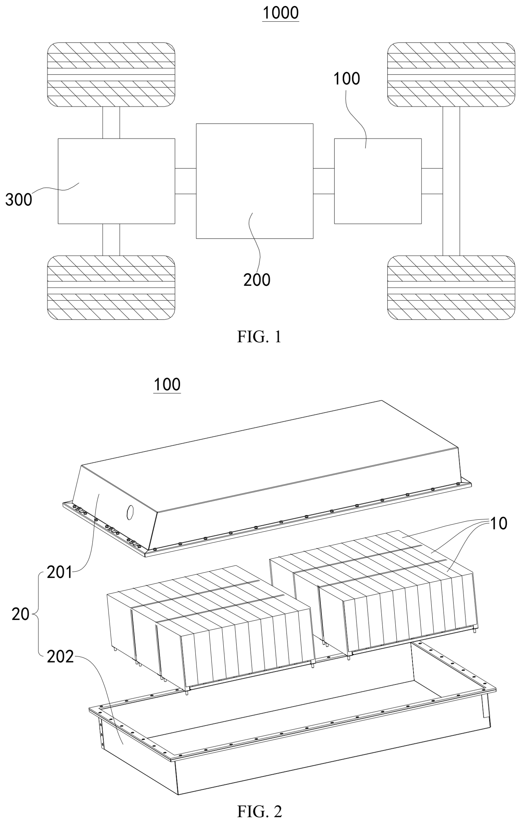

Referring to FIG. 1, FIG. 1 is a schematic structural diagram of a vehicle according to some embodiments of the present application. The vehicle may be an oil-fueled vehicle, a gas-powered vehicle, or a new energy vehicle. The new energy vehicle may be a battery electric vehicle, a hybrid electric vehicle, an extended-range electric vehicle, or the like. A battery 100 is arranged inside the vehicle, and the battery 100 may be arranged at the bottom, the front, or the back of the vehicle. The battery 100 may be configured to supply power to the vehicle. For example, the battery 100 may be used as a power supply for operating the vehicle. The vehicle may further include a controller 200 and a motor 300. The controller 200 is configured to control the battery 100 to supply power to the motor 300, for example, for working power requirements during start-up, navigation, and traveling of the vehicle.

In some embodiments of the present application, the battery 100 can be used as a power supply for operating the vehicle, and can also be used as a power supply for driving the vehicle, to provide driving power for the vehicle in place of or partially in place of fuel or natural gas.

Referring to FIG. 2, FIG. 2 is an exploded view of a battery 100 according to some embodiments of the present application. A battery 100 includes a box 20 and battery cells 10. The battery cells 10 are accommodated in the box 20. The box 20 is configured to provide an accommodating space for the battery cells 10. The box 20 may use a plurality of structures. In some embodiments, the box 20 may include a first part 201 and a second part 202, the first part 201 and the second part 202 cover each other, and the first part 201 and the second part 202 jointly define the accommodating space for accommodating the battery cells 10. The second part 202 may be a hollow structure being open on one side, the first part 201 may be a plate-shaped structure, and the first part 201 covers the open side of the second part 202, so that the first part 201 and the second part 202 jointly define the accommodating space. Alternatively, each of the first part 201 and the second part 202 may be a hollow structure being open on one side, and an open side of the first part 201 covers an open side of the second part 202. Certainly, the box 20 formed by the first part 201 and the second part 202 may be in various shapes, such as a cylinder, and a cuboid.

In the battery 100, there may be a plurality of battery cells 10, and the plurality of battery cells 10 can be connected in series, parallel, or series-parallel. Series-parallel connection means that both series connection and parallel connection exist among the plurality of battery cells 10. The plurality of battery cells 10 may be directly connected in series, parallel, or series-parallel, and then an entirety formed by the plurality of battery cells 10 is accommodated in the box 20. Certainly, the battery 100 may be in a battery 100 module form in which the plurality of battery cells 10 may alternatively be first connected in series, parallel, or series-parallel, then a plurality of battery 100 modules are connected in series, parallel, or series-parallel, to form an entirety, and the entirety is accommodated in the box 20. The battery 100 may also include other structures, for example, the battery 100 may also include a bus component for implementing an electrical connection among the plurality of battery cells 10.

Each battery cell 10 may be a secondary battery or a primary battery; or may be a lithium-sulfur battery, a sodium-ion battery, or a magnesium-ion battery, but is not limited thereto. The battery cell 10 may be in a shape of a cylinder, a flat body, or a cuboid, or in another shape.

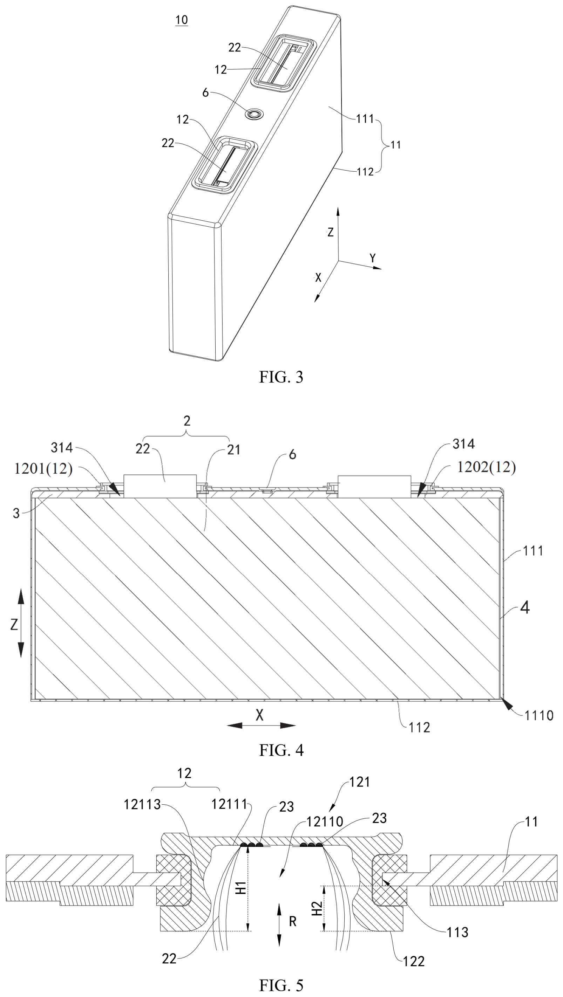

Referring to FIG. 3 and FIG. 4, FIG. 3 is a schematic exploded structural view of a battery cell 10 according to some embodiments of the present application; and FIG. 4 is a cross-sectional view of a structure of a battery cell 10 according to some embodiments of the present application. The battery cell 10 is a smallest unit forming the battery 100. The battery cell 10 includes a housing 11 and an electrode assembly 2. The housing 11 is provided with a terminal 12. The housing 11 may include a housing body 111 and a housing cover 112.

The housing cover 112 is a component that covers an opening 1110 of the housing body 111 to isolate an internal environment of the battery cell 10 from an external environment. Without limitation, a shape of the housing cover 112 may be adapted to a shape of the housing body 111 to match the housing body 111. Optionally, the housing cover 112 may be made of a material with specified hardness and strength (for example, aluminum alloy), so that the housing cover 112 is less likely to deform under extrusion and collision. In this way, the battery cell 10 can have higher structural strength and improved reliability. A functional component like an electrode terminal may be arranged on the housing cover 112. The electrode terminal may be configured to electrically connect to the electrode assembly 2, to output or input electric energy of the battery cell 10. The housing cover 112 may be made of a plurality of materials, for example, copper, iron, aluminum, stainless steel, aluminum alloy, and plastic, which are not particularly limited in the embodiments of the present application.

The housing body 111 is an assembly configured to form the internal environment of the battery cell 10 together with the housing cover 112. The formed internal environment may be configured to accommodate the electrode assembly 2, an electrolyte solution, and other components. The housing body 111 and the housing cover 112 may be independent components. The opening 1110 may be provided on the housing body 111, so that the housing cover 112 covers the opening 1110 to form the internal environment of the battery cell 10. Without limitation, the housing cover 112 and the housing body 111 may alternatively be integrated. Specifically, the housing cover 112 and the housing body 111 may first form a common connection surface before other components are put into the housing. When the interior of the housing body 111 needs to be encapsulated, the housing cover 112 covers the housing body 111. The housing body 111 may be in various shapes and various sizes, for example, a rectangular shape, a cylindrical shape, and a hexagonal prism shape. Specifically, the shape of the housing body 111 may be determined according to a specific shape and size of the electrode assembly 2. The housing body 111 may be made of a plurality of materials, for example, copper, iron, aluminum, stainless steel, aluminum alloy, and plastic, which are not particularly limited in the embodiments of the present application.

The electrode assembly 2 is a component in the battery cell 10 that undergoes electrochemical reactions. The housing 11 may include one or more electrode assemblies 2. The electrode assembly 2 includes an active material coating portion 21 and a tab 22 connected to the active material coating portion 21. Specifically, the electrode assembly 2 is mainly formed by winding or laminating a positive electrode plate and a negative electrode plate, and a separator is generally provided between the positive electrode plate and the negative electrode plate. Parts of the positive electrode plate and the negative electrode plate that have active materials constitute the active material coating portion 21 of the electrode assembly 2, and parts of the positive electrode plate and the negative electrode plate that do not have the active materials each constitute a tab. A positive electrode tab and a negative electrode tab may be located at one end of the active material coating portion 21 together or at two ends of the active material coating portion 21 separately. During charging and discharging of the battery 100, a positive active material and a negative active material react with the electrolyte solution, and the tabs are connected to electrode terminals (for example, terminals) to form a current loop.

As shown in FIG. 3 and FIG. 4, the battery cell 10 further includes a bracket 3, an insulating member 4, and an explosion-proof valve 6. The bracket 3 is arranged at one end of the active material coating portion 21. A through hole 314 is provided on the bracket 3, and the tab 22 passes through the through hole 314 to be connected to the terminal 12. The insulating member 4 is connected to the bracket 3, and the insulating member 4 and the bracket 3 jointly wrap around a circumferential direction of the electrode assembly 2. The insulating member 4 may be configured to isolate an electrical connection component inside the housing 11 from the housing 11, to reduce a risk of a short circuit. For example, the insulating member 4 may be made of plastic, rubber, or the like. The insulating member 4 and the bracket 3 may be connected through bonding, or may be connected through hot-melting. Certainly, the insulating member 4 and the bracket 3 may alternatively be connected in another manner. The explosion-proof valve 6 is arranged on the housing 11. The explosion-proof valve 6 is configured to relieve an internal pressure when the internal pressure or a temperature of the battery cell 10 reaches a threshold. The explosion-proof valve 6 may be arranged on the housing cover 112 or may be arranged on the housing body 111.

Further referring to FIG. 5, FIG. 5 is a schematic diagram of a partial structure of a battery cell 10 according to some embodiments of the present application. The tab 22 is connected to the terminal 12 through welding, and a weld mark 23 is formed. The tab 22 may be welded to the terminal 12 through laser welding. During the laser welding, a partial structure of the tab 22 absorbs laser energy and then converts the laser energy into thermal energy, so that a material locally heats up and melts. Subsequently, after the material cools and solidifies, the tab 22 is connected to the terminal 12, and the weld mark 23 is formed at a connection position of the tab 22 and the terminal 12. Certainly, the tab 22 and the terminal 12 may alternatively be connected in another welding manner.

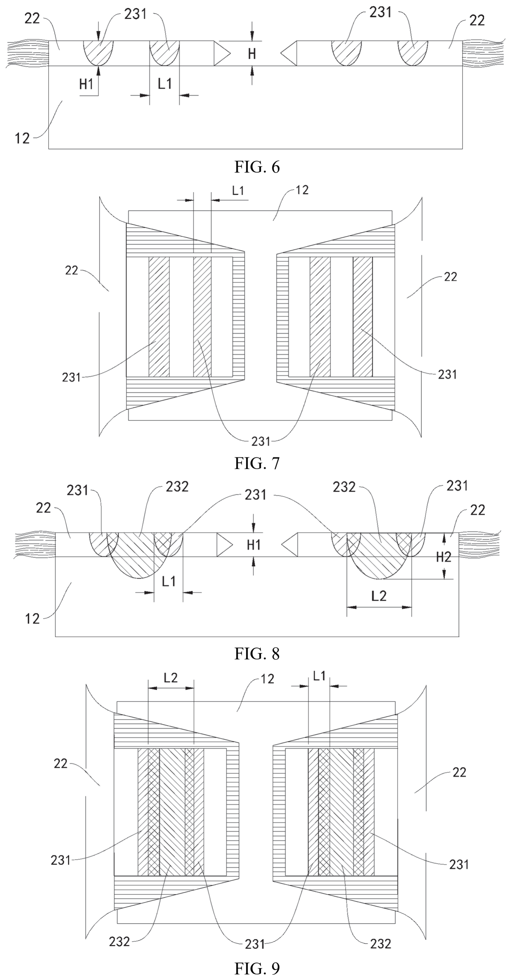

Still referring to FIG. 5, and further referring to FIG. 6 to FIG. 9, FIG. 6 is a schematic diagram of welding a tab 22 and a terminal 12 of the battery cell 10 shown in FIG. 5; FIG. 7 is a bottom view of the structure shown in FIG. 6; FIG. 8 is a schematic diagram of welding a tab 22 and a terminal 12 of the battery cell 10 shown in FIG. 5; and FIG. 9 is a bottom view of the structure shown in FIG. 8. The weld mark 23 formed by welding the tab 22 and the terminal 12 includes a first weld 231 and a second weld 232. The second weld 232 is located on a side of the first weld 231 in a width direction of the first weld 231, and the second weld 232 partially overlaps with the first weld 231. A maximum thickness of the first weld 231 is less than a maximum thickness of the second weld 232.

In the technical solution of the embodiments of the present application, because an edge of the second weld 232 is prone to undergo a crack to affect connection strength of the weld mark 23, the first weld 231 is formed on a side of the second weld 232 in a width direction of the second weld 232. By using the first weld 231, a probability that a plurality of layers of tab pieces of the tab 22 undergo a weld crack can be effectively reduced, and an overcurrent temperature increase can be reduced, so that a probability that the electrode assembly 2 undergoes a thermal runaway due to an excessively large temperature increase can be reduced. In addition, anti-peeling strength of the weld mark 23 on the tab 22 can be increased, thereby significantly improving reliability of the battery cell 10.

In a process of welding the tab 22 to the terminal 12, the first weld 231 may be first formed, and then the second weld 232 may be formed.

Specifically, after a plurality of tab pieces of the tab 22 are paired, ultrasonic welding is performed to form a plate-shaped structure. The plate-shaped structure includes a plurality of layers of tab pieces. In the process of welding the tab 22 to the terminal 12, the first weld 231 shown in FIG. 6 and FIG. 7 may be first formed. The first weld 231 is used as a backing weld. The maximum thickness of the first weld 231 is small. That is, a depth of a puddle of the first weld 231 is small. That is, a depth of a puddle of the backing weld is small, and required welding power is small. This can greatly reduce a thermal input in an early stage of welding, thereby reducing thermal contraction of the puddle of the backing weld, and reducing a risk that the plurality of layers of tab pieces of the tab 22 break off.

After the first weld 231 is formed, the second weld 232 shown in FIG. 8 and FIG. 9 is formed. The second weld 232 is used as a main weld. The maximum thickness of the second weld 232 is large. That is, a depth of a puddle of the second weld 232 is large. That is, a depth of a puddle of the main weld is large, and required welding power is large. Specifically, when the main weld is welded, an edge of the puddle of the main weld falls in the puddle of the backing weld that has solidified into a solid structure. In this case, when the puddle of the main welds contracts, a plurality of layers of tab pieces at the backing puddle is not affected. This can reduce a proportion of a thermal crack undergone by the plurality of layers of tab pieces. In addition, welding of the main weld herein can be equivalent to welding of a solid adapting piece in the related technology, and can improve reliability of an electrical connection between the terminal 12 and the tab 22.

It is found through a comparison experiment that, compared with a manner of welding the tab 22 and the terminal 12 of the battery cell 10 in the related technology, the proportion of the thermal crack undergone by an electrode piece can be reduced by 50% to 80%, and anti-peeling force can be increased by 80% to 120%, thereby significantly increasing the anti-peeling strength of the weld mark 23.

Therefore, in the foregoing technical solution, because the maximum thickness of the first weld 231 first formed is less than the maximum thickness of the second weld 232 then formed, welding power when the first weld 231 is formed is less than welding power when the second weld 232 is formed, and welding at large power is gradually transitioned to welding at small power. In this way, the probability that the plurality of layers of tab pieces of the tab 22 undergo the weld crack can be effectively reduced, and the overcurrent temperature increase can be reduced, so that the probability that the electrode assembly 2 undergoes the thermal runaway due to the excessively large temperature increase can be reduced. In addition, the anti-peeling strength of the weld mark 23 on the tab 22 can be increased, thereby significantly improving the reliability of the battery cell 10.

Certainly, in the process of welding the tab 22 to the terminal 12, the second weld 232 may alternatively be first formed, and then the first weld 231 is formed. By using the first weld 231, similarly, the probability that the plurality of layers of tab pieces of the tab 22 undergo the weld crack can be effectively reduced, and the overcurrent temperature increase can be reduced, so that the probability that the electrode assembly 2 undergoes the thermal runaway due to the excessively large temperature increase can be reduced. In addition, the anti-peeling strength of the weld mark 23 on the tab 22 is increased, thereby significantly improving the reliability of the battery cell 10.

Referring to FIG. 6 again, the maximum thickness of the first weld 231 is H1. A thickness of the tab 22 is H. A ratio of the maximum thickness H1 of the first weld 231 to the thickness H of the tab 22 ranges from 0.8 to 1.2.

The "maximum thickness" of the first weld 231 is the depth of the puddle of the first weld 231, that is, the depth of the puddle of the foregoing backing weld. The depth of the puddle of the backing weld is equal to a distance between the top of the puddle and the bottom of the puddle. A position of the backing weld may be determined according to a preset position of the main weld (that is, the second weld 232). For example, the ratio H1/H of the maximum thickness of the first weld 231 to the thickness of the tab 22 may be 0.8, 0.9, 1, 1.1, 1.2, or the like.

In the foregoing technical solution, the ratio of the maximum thickness of the first weld 231 to the thickness of the tab 22 is limited in the foregoing range. In this way, welding power when the first weld 231 is formed can be reduced, a thermal input when the first weld 231 is formed can be reduced, and a risk that the plurality of layers of tab pieces of the tab 22 break off can be reduced. In addition, impact of a thermal input on the plurality of layers of tab pieces at the position when the second weld 232 is formed can be reduced, a proportion of a thermal crack undergone by the plurality of layers of tab pieces can be further reduced, and quality of welding the tab 22 and the terminal 12 can be improved, thereby improving the reliability of the battery cell 10.

In optional embodiments, the ratio of the maximum thickness of the first weld 231 to the thickness of the tab 22 ranges from 0.8 to 1. In other words, the maximum thickness of the first weld 231 is less than or equal to the thickness of the tab 22. For example, the ratio of the maximum thickness H1 of the first weld 231 to the thickness H of the tab 22 may be 0.8, 0.85, 0.9, 0.95, or 1.

In the foregoing technical solution, the ratio of the maximum thickness of the first weld 231 to the thickness of the tab 22 is limited in the foregoing range. In this way, the quality of welding the tab 22 and the terminal 12 can be improved, thereby improving the reliability of the battery cell 10.

As shown in FIG. 6 and FIG. 7, a width L1 of the first weld 231 ranges from 0.5 mm to 3.0 mm. For example, the width L1 of the first weld 231 may be 0.5 mm, 1 mm, 1.5 mm, 2 mm, 2.5 mm, 3.0 mm, or the like.

The "width" of the first weld 231 is a relative description manner. The width of the first weld 231 is relative to a length of the first weld 231. The length of the first weld 231 is a distance between two joints of the first weld 231. Therefore, the width of the first weld 231 is a size of the first weld 231 in a direction perpendicular to a length direction of the first weld 231.

In the foregoing technical solution, the width of the first weld 231 is limited to satisfying the foregoing condition, so that the first weld 231 can partially overlap with the second weld 232 in the width direction. In this way, when a puddle of the second weld 232 contracts, the plurality of layers of tab pieces at the first weld 231 are not affected, thereby further reducing the proportion of the thermal crack undergone by the plurality of layers of tab pieces, and improving the reliability of the electrical connection between the terminal 12 and the tab 22.

Referring to FIG. 8 and FIG. 9 again, the maximum thickness of the second weld 232 is H2. The thickness of the tab 22 is H. H2 is greater than H, to cause the second weld 232 to pass through the tab 22 and the first weld 231 in a thickness direction of the second weld 232 and extend into the terminal 12.

Specifically, the second weld 232 is used as the main weld. The depth of the puddle of the main weld is greater than the thickness of the tab 22, so that the puddle of the main weld can pass through the tab 22 and the terminal 12, to weld the tab 22 and the terminal 12 together to form a conductive channel.

In the foregoing technical solution, the maximum thickness of the second weld 232 is limited to being greater than the thickness of the tab 22, so that the puddle of the second weld 232 can pass through the tab 22 and extend into the terminal 12. After the puddle of the second weld 232 solidifies, the tab 22 and the terminal 12 can be connected together, to implement the electrical connection between the tab 22 and the terminal 12. Because the thermal input formed by the second weld 232 has little impact on the plurality of layers of tab pieces at the first weld 231, the proportion of the thermal crack undergone by the plurality of layers of tab pieces can be reduced, and the quality of welding the tab 22 and the terminal 12 can be improved, thereby improving the reliability of the battery cell 10.

Referring to FIG. 8 again, a width of the second weld 232 is L2. The width of the first weld 231 is L1. The width L2 of the second weld 232 is greater than twice the width L1 of the first weld 231.

The "width" of the second weld 232 is a relative description manner. The width of the second weld 232 is relative to a length of the second weld 232. The length of the second weld 232 is a distance between two joints of the second weld 232. Therefore, the width of the second weld 232 is a size of the second weld 232 in a direction perpendicular to a length direction of the second weld 232.

In the foregoing technical solution, the width of the second weld 232 is limited to satisfying the foregoing condition, so that the first weld 231 can partially overlap with the second weld 232 in the width direction, and an edge of the puddle of the second weld 232 is located inside the puddle of the first weld 231. In this way, when the puddle of the second weld 232 contracts, the plurality of layers of tab pieces at the first weld 231 are not affected, thereby further reducing the proportion of the thermal crack undergone by the plurality of layers of tab pieces, and improving the reliability of the electrical connection between the terminal 12 and the tab 22.

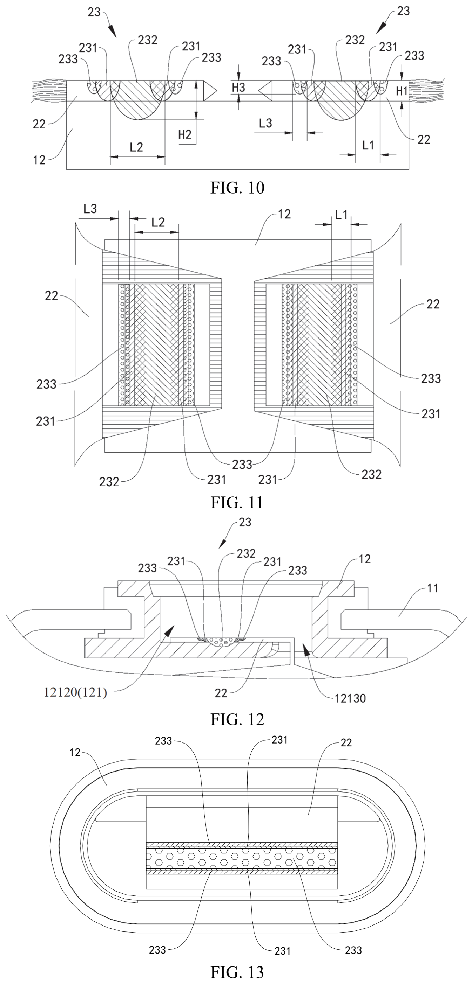

Still referring to FIG. 5 to FIG. 9, and further referring to FIG. 10 and FIG. 11, FIG. 10 is a schematic diagram of welding a tab 22 and a terminal 12 of the battery cell 10 shown in FIG. 5; and FIG. 11 is a bottom view of the structure shown in FIG. 10. The weld mark 23 further includes a third weld 233. The third weld 233 and the second weld 232 are respectively located on two opposite sides of the first weld 231 in the width direction of the first weld 231. The third weld 233 partially overlaps with the first weld 231.

A maximum thickness of the third weld 233 is H3. The thickness of the tab 22 is H. The maximum thickness H3 of the third weld 233 is less than the thickness H of the tab 22.

Specifically, in the process of welding the tab 22 to the terminal 12, the first weld 231 shown in FIG. 6 and FIG. 7 may be first formed, then the second weld 232 shown in FIG. 8 and FIG. 9 is formed, and the third weld 233 shown in FIG. 11 and FIG. 10 is finally formed. Alternatively, the first weld 231 shown in FIG. 6 and FIG. 7 may be first formed, then the third weld 233 shown in FIG. 11 and FIG. 10 is formed, and the second weld 232 shown in FIG. 8 and FIG. 9 is finally formed. Alternatively, the first weld 231 shown in FIG. 6 and FIG. 7 may be first formed, and then the second weld 232 shown in FIG. 8 and FIG. 9 and the third weld 233 shown in FIG. 11 and FIG. 10 are simultaneously formed.

The third weld 233 is used as a repair weld. A maximum thickness of the repair weld is small. That is, a depth of a puddle of the repair weld is small, and required welding power is small. This can reduce a thermal input during welding, thereby reducing thermal contraction of the puddle of the repair weld, and reducing the risk that the plurality of layers of tab pieces of the tab 22 break off.

Therefore, in the foregoing technical solution, the third weld 233 is arranged, so that a micro weld crack of the plurality of layers of tab pieces at an edge of the first weld 231 can be repaired, and strength of the welding connection between the tab 22 and the terminal 12 can also be greatly improved.

Referring to FIG. 10 and FIG. 11 again, a ratio of the maximum thickness H3 of the third weld 233 to the thickness H of the tab 22 ranges from 0.5 to 0.8. For example, the ratio of the maximum thickness H3 of the third weld 233 to the thickness H of the tab 22 may be 0.5, 0.6, 0.7, 0.8, or the like.

The "maximum thickness" of the third weld 233 is the depth of the puddle of the third weld 233, that is, the depth of the puddle of the foregoing repair weld. The depth of the puddle of the repair weld is equal to a distance between the top of the puddle and the bottom of the puddle. A position of the repair weld may be determined according to a preset position of the backing weld (that is, the first weld 231).

In the foregoing technical solution, the ratio of the maximum thickness of the third weld 233 to the thickness of the tab 22 is limited in the foregoing range. In this way, welding power when the third weld 233 is formed can be reduced, a thermal input when the third weld 233 is formed can be reduced, and the risk that the plurality of layers of tab pieces of the tab 22 break off can be reduced. In addition, the micro weld crack generated by the first weld 231 can be better repaired, the proportion of the thermal crack undergone by the plurality of layers of tab pieces can be further reduced, and the quality of welding the tab 22 and the terminal 12 can be improved, thereby improving the reliability of the battery cell 10.

Referring to FIG. 10 and FIG. 11 again, the maximum thickness H3 of the third weld 233 is less than the maximum thickness H1 of the first weld 231.

That is, the depth of the puddle of the repair weld is less than that of the puddle of the backing weld, and the welding power for forming the repair weld is less than the welding power for forming the backing weld. Therefore, a thermal input when the repair weld is formed is less than a thermal input when the backing weld is formed. Because the repair weld is located at an outer edge of the backing weld and partially overlaps with the backing weld, and a crack of the tab 22 generated after the repair weld is formed is more slight than that of the backing weld, the repair weld may repair a micro crack of the plurality of layers of tab pieces at the edge of the puddle of the backing weld, thereby further reducing a proportion of a weld crack of the plurality of layers of tab pieces.

Therefore, in the foregoing technical solution, the maximum thickness of the third weld 233 is limited to being less than the maximum thickness of the first weld 231, and welding at large power is transitioned to welding at small power. In this way, the micro weld crack of the plurality of layers of tab pieces at the edge of the puddle of the first weld 231 can be repaired, the probability that the plurality of layers of tab pieces of the tab 22 undergo the weld crack can be effectively reduced, and the overcurrent temperature increase can be reduced, so that the probability that the electrode assembly 2 undergoes the thermal runaway due to the excessively large temperature increase can be reduced. In addition, the anti-peeling strength of the weld mark 23 on the tab 22 can be increased, thereby significantly improving the reliability of the battery cell 10.

As shown in FIG. 10 and FIG. 11, a width L3 of the third weld 233 ranges from 0.5 mm to 2.0 mm. For example, the width L3 of the third weld 233 may be 0.5 mm, 1 mm, 1.5 mm, 2.0 mm, or the like.

The "width" of the third weld 233 is a relative description manner. The width of the third weld 233 is relative to a length of the third weld 233. The length of the third weld 233 is a distance between two joints of the third weld 233. Therefore, the width of the third weld 233 is a size of the third weld 233 in a direction perpendicular to a length direction of the third weld 233.

In the foregoing technical solution, the width of the third weld 233 is limited to satisfying the foregoing condition, so that the third weld 233 can partially overlap with the first weld 231 in the width direction. In this way, when the puddle of the third weld 233 contracts, the plurality of layers of tab pieces at the first weld 231 are not affected, thereby further reducing the proportion of the thermal crack undergone by the plurality of layers of tab pieces, and improving the reliability of the electrical connection between the terminal 12 and the tab 22.

In optional embodiments, each of the first weld 231, the second weld 232, and the third weld 233 includes a plurality of weld parts. The plurality of weld parts are arranged and connected in a length direction of the corresponding weld. The plurality of weld parts are arranged and connected in the length direction of the corresponding weld, so that a continuous weld can be formed, thereby improving quality of welding, and further improving the reliability of the battery cell 10.

Referring to FIG. 10 and FIG. 11 again, the first weld 231 is separately provided on two opposite sides of the second weld 232 in the width direction of the second weld 232. The second weld 232 and the third weld 233 are respectively provided on two opposite sides of each of first welds 231 in the width direction of the first weld 231.

Specifically, the weld mark 23 has a length direction and a width direction. The second weld 232 is located right in the middle of the weld mark 23 in the width direction of the weld mark 23. The first weld 231 is separately provided on the two sides of the second weld 232 in the width direction of the second weld 232, and each first weld 231 overlaps with the second weld 232 in the width direction of the weld mark 23. The third weld 233 is provided on a side of each first weld 231 away from the second weld 232, and each second weld 232 overlaps with the corresponding third weld 233 in the width direction of the weld mark 23, so that a puddle of the weld mark 23 approximately forms a "T" shape.

In the foregoing technical solution, compared with the manner of welding the tab 22 and the terminal 12 of the battery cell 10 in the related technology, in the present application, when the tab 22 is peeled or pulled, peeling force undergone by a plurality of layers of tab pieces at a part connected to the puddle of the third weld 233 may be converted into shear force, thereby greatly improving the strength of the welding connection between the tab 22 and the terminal 12.

The housing 11 includes the housing cover 112 and the housing body 111 provided with the opening 1110. The housing cover 112 covers the opening 1110. The terminal 12 is arranged on the housing cover 112 and/or a wall of the housing body 111 opposite to the opening 1110.

Specifically, all terminals 12 of the battery cell 10 may be arranged on the housing cover 112. Alternatively, all the terminals 12 of the battery cell 10 may be arranged on the housing body 111, for example, all the terminals 12 are arranged on the wall of the housing body 111 opposite to the opening 1110. Alternatively, some terminals 12 of the battery cell 10 may be arranged on the housing cover 112, and the other terminals 12 are arranged on the housing body 111.

In the foregoing technical solution, the terminal 12 is arranged on the housing cover 112, so that a mounting step of the terminal 12 can be simplified; and a structure of a die can be simplified, and a size of the die can be reduced, thereby helping reduce costs. The terminal 12 is arranged on the wall of the housing body 111 opposite to the opening 1110, to improve structural strength of the housing body 111, and facilitate the connection between the tab 22 and the terminal 12 after the electrode assembly is assembled in the housing body 111, thereby helping improve production efficiency.

Referring to FIG. 10 and FIG. 11 again, the tab 22 is connected to a side of the terminal 12 facing the active material coating portion 21 through welding. In an embodiment in which the terminal 12 is arranged on the wall of the housing body 111 opposite to the opening 1110, the tab 22 and the terminal 12 need to be passed through and welded from an outer side of the housing body 111. In an embodiment in which the terminal 12 is arranged on the housing cover 112, the tab 22 and the terminal 12 need to be welded from an inner side of the housing cover 112.

Referring to FIG. 12 and FIG. 13, FIG. 12 is a schematic diagram of a partial structure of a battery cell 10 according to some other embodiments of the present application; and FIG. 13 is a schematic diagram of welding a tab 22 and a terminal 12 of the battery cell 10 shown in FIG. 12. The tab 22 is connected to a side of the terminal 12 away from the active material coating portion 21 through welding, and the tab 22 and the terminal 12 need to be welded from an outer side of the housing body 111 or the housing cover 112.

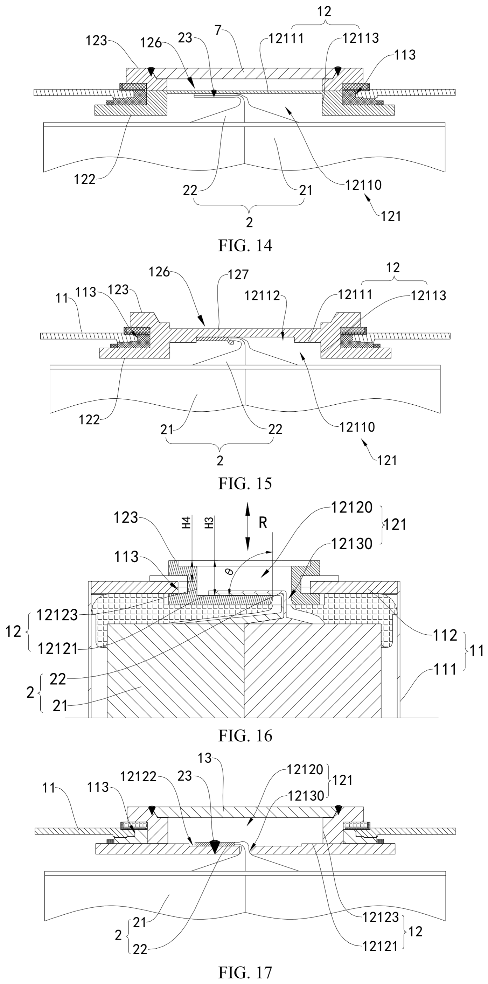

Still referring to FIG. 5, and further referring to FIG. 14, FIG. 14 is a partial cross-sectional view of a battery cell 10 according to some embodiments of the present application. An accommodating portion 121 is provided on the terminal 12. The accommodating portion 121 is in communication with the through hole 314. The tab 22 at least partially passes through the through hole 314 and then extends into and is accommodated in the accommodating portion 121, and the tab 22 is electrically connected to the terminal 12. In other words, the terminal 12 is configured as a hollow structure.

At least partially means that the tab 22 may be entirely accommodated in the accommodating portion 121, or the tab 22 may be partially accommodated in the accommodating portion 121. Because the accommodating portion 121 is provided on the terminal 12, a hollow structure of the accommodating portion 121 can reduce a weight of the terminal 12 to a certain extent, to improve gravimetric energy density of the battery cell 10 and the battery 100. In addition, the tab 22 can be accommodated in the accommodating portion 121, to improve assembly efficiency of the tab 22, further reduce space occupied by the tab 22, and fully use space of the battery cell 10, so that both matching between the bracket 3 and the terminal 12 and matching between the bracket 3 and the tab 22 are tighter and more reliable, and a structure of the battery cell 10 is more compact, thereby helping improve energy density of the battery cell 10.

More specifically, the tab 22 is partially or entirely accommodated in the accommodating portion 121, so that a part of the tab 22 that is located in the accommodating portion 121 can occupy space in the terminal 12, to reduce the space occupied by the tab 22 in the housing 11. When a size of the housing 11 is fixed, some space can be saved in the housing 11, to accommodate the active material coating portion 21 having a larger size, thereby improving volume energy density of the battery cell 10. For example, when the tab 22 is led out from a side of the active material coating portion 21 close to the terminal 12, the space occupied by the tab 22 between the active material coating portion 21 and the terminal 12 can be saved, a size of the active material coating portion 21 in a direction in which the tab 22 is led out can be increased, thereby reducing a distance between the active material coating portion 21 and the terminal 12, and improving the energy density of the battery cell 10.

In addition, the tab 22 is at least partially accommodated in the accommodating portion 121, so that space occupied by the battery cell 10 can be reduced, and a larger quantity of battery cells 10 can be accommodated by the battery 100 having the same volume, thereby improving the volume energy density of the battery 100. In addition, the tab 22 is at least partially accommodated in the accommodating portion 121 to occupy the space in the terminal 12, to reduce redundancy of the tab 22 in the housing 11 to at least a certain extent, reduce a probability of a short circuit between the tab 22 and the active material coating portion 21, reduce a probability of a short circuit of the battery cell 10, and improve working reliability and stability of the battery cell 10 and the battery 100.

It should be noted that, in the embodiments of the present application, the accommodating portion 121 may be located on the side of the terminal 12 facing the active material coating portion 21, or may be located on the side of the terminal 12 away from the active material coating portion 21.

For example, referring to FIG. 5 and FIG. 14 again, when the accommodating portion 121 is located on the side of the terminal 12 facing the active material coating portion 21, the accommodating portion 121 includes a first accommodating groove 12110. A surface on the side of the terminal 12 facing the active material coating portion 21 is a terminal inner end surface 122. A notch of the first accommodating groove 12110 is formed on the terminal inner end surface 122. The tab 22 is at least partially accommodated in the first accommodating groove 12110.

For example, the first accommodating groove 12110 is a groove body, and the groove body is of a groove-shaped structure having a specific depth. For example, when the terminal 12 is arranged on an upper end wall of the housing 11, and the terminal inner end surface 122 is a lower surface of the terminal 12, the first accommodating groove 12110 is formed as an accommodating groove in which the notch opens downwardly and a groove wall is recessed upwardly. For another example, when the terminal 12 is arranged on a lower end wall of the housing 11, and the terminal inner end surface 122 is an upper surface of the terminal 12, the first accommodating groove 12110 is formed as an accommodating groove in which the notch opens upwardly and a groove wall is recessed downwardly.

In the foregoing technical solution, the first accommodating groove 12110 is provided on the terminal 12 to reduce the weight of the terminal 12 to a certain extent, to improve the gravimetric energy density of the battery cell 10 and the battery 100. In addition, because the notch of the first accommodating groove 12110 is formed on the terminal inner end surface 122, and the terminal inner end surface 122 is the surface on the side of the terminal 12 close to the active material coating portion 21, the first accommodating groove 12110 may open in a direction facing the active material coating portion 21, to facilitate extension of the tab 22 into the first accommodating groove 12110, and improve the assembly efficiency. In addition, the first accommodating groove 12110 in this form is easy to be processed, thereby improving production efficiency.

In addition, the first accommodating groove 12110 is easy to be processed to have a relatively large volume, and can accommodate more tabs 22. In addition, because the first accommodating groove 12110 opens in the direction facing the active material coating portion 21, the first accommodating groove 12110 may be further used as a buffer and temporary storage structure for the electrolyte solution, so that the housing 11 can accommodate more electrolyte solutions. Because the electrolyte solution is consumed during charging and discharging of the battery cell 10, when there are more electrolyte solutions, service life of the battery cell 10 can be prolonged. Because the first accommodating groove 12110 opens in the direction facing the active material coating portion 21, the first accommodating groove 12110 may also be used as an accommodating and buffer structure for generated gas inside the electrode assembly 2, to reduce expansion of the battery cell 10, and improve the reliability and the stability of the battery cell 10.

In addition, because the first accommodating groove 12110 is located on an inner side of the terminal 12, external foreign matters and impurities do not easily enter the first accommodating groove 12110. In this way, impact of the external foreign matters and impurities on the electrode assembly 2 can be reduced, and working stability and reliability of the electrode assembly 2 can be improved, thereby improving the stability and the reliability of the battery cell 10 and the battery 100.

Referring to FIG. 5 again, in the embodiments of the present application, a connection manner between the terminal 12 and the housing 11 is not limited. For example, the connection manner may be welding, or may be riveting. For example, when the terminal 12 matches the housing 11 through riveting, a mounting hole 113 is provided on the housing 11, and the terminal 12 is riveted and mounted at the mounting hole 113. Certainly, it may be understood that, when the terminal 12 matches the housing 11 through welding or in another manner, the mounting hole 113 may alternatively be provided on the housing 11, so that the terminal 12 can be mounted on the housing 11 through the mounting hole 113. This is not limited herein.

In addition, the first accommodating groove 12110 may be provided corresponding to a position of the mounting hole 113. Alternatively, on a projection surface perpendicular to an axial direction R of the terminal 12, an orthographic projection of the first accommodating groove 12110 is located within a range of an orthographic projection of the mounting hole 113, so that the first accommodating groove 12110 may have a relatively large depth, to accommodate more tabs 22, thereby reducing the space occupied by the tab 22 in the housing 11 to a larger extent. Specifically, when the mounting hole 113 is provided on the housing 11, and the terminal 12 is mounted in the mounting hole 113, in the axial direction R of the terminal 12, a depth H1 of the first accommodating groove 12110 is greater than or equal to a smallest distance H2 between the terminal inner end surface 122 and the mounting hole 113.

It should be noted that, a specific shape of the first accommodating groove 12110 is not limited, and may be a regular shape or may be an irregular shape. For example, the first accommodating groove 12110 is a cylindrical groove whose cross section is a rectangular section, an elliptical section, a racetrack-shaped section, or the like, is a trapezoidal groove whose cross section is rectangular and whose section size is gradually changed, is a hemispherical groove whose cross section is circular and whose section size is gradually changed, is an elliptical spherical groove whose cross section is elliptical and whose section size is gradually changed, or the like. Therefore, the depth H1 of the first accommodating groove 12110 is a largest depth of the first accommodating groove 12110 in the axial direction R of the terminal 12.

Because in the axial direction R of the terminal 12, the depth H1 of the first accommodating groove 12110 is greater than or equal to the smallest distance H2 between the terminal inner end surface 122 and the mounting hole 113, a volume of the terminal 12 can be fully used. In this way, the first accommodating groove 12110 has a relatively large depth, to help accommodate more tabs 22, thereby reducing the space occupied by the tab 22 in the housing 11 to a larger extent, further improving the energy density of the battery cell 10, and further reducing the redundancy of the tab 22 in the housing 11. In addition, because the first accommodating groove 12110 has the relatively large depth, the first accommodating groove 12110 can also accommodate gas generated by the electrode assembly 2, thereby improving the reliability and the stability of the battery cell 10, and the first accommodating groove 12110 can further accommodate more electrolyte solutions, thereby improving the service life of the battery cell 10.

Referring to FIG. 5 and FIG. 14 again, to improve stability and reliability of an electrical connection between the active material coating portion 21 and the terminal 12, in some embodiments of the present application, an electrical connection position between the tab 22 and the terminal 12 may be located on a groove wall of the first accommodating groove 12110 formed in the accommodating portion 121.

For example, an electrical connection may be formed between the tab 22 and the terminal 12 through welding, and the electrical connection position is a welding position between the tab 22 and the terminal 12. In addition, a manner of welding the tab 22 and the terminal 12 is not limited, for example, may be laser welding. In addition, vertical welding, oblique welding, or the like and lap welding, edge sealing welding, or the like may be selected according to a factor like a position, an angle, or a structure of a welding portion. In other embodiments of the present application, instead of welding, the tab 22 and the terminal 12 may be electrically connected in another manner, for example, a manner of arranging a conductive adhesive or a conductive nail. For ease of description, descriptions are provided below by using an example in which the tab 22 is electrically connected to the terminal 12 through welding, and the welding position is the electrical connection position between the tab 22 and the terminal 12.

Specifically, the terminal 12 specifically includes a first end wall 12111 and a first side wall 12113. The first end wall 12111 is located on a side of the first side wall 12113 away from the active material coating portion 21. The first end wall 12111 and the first side wall 12113 enclose the first accommodating groove 12110. The electrical connection position between the tab 22 and the terminal 12 is located on the first end wall 12111 and/or the first side wall 12113. In other words, the tab 22 may be welded to at least one of the first end wall 12111 and the first side wall 12113.

In the foregoing technical solution, the electrical connection position between the tab 22 and the terminal 12 is arranged on at least one of the first end wall 12111 and the first side wall 12113, so that the first accommodating groove 12110 has a function of accommodating at least a part of the tab 22, and the groove wall of the first accommodating groove 12110 further has a function of implementing the electrical connection with the tab 22. In this way, a structure of the terminal 12 can be simplified, thereby facilitating processing of the terminal 12. In addition, a structure of the tab 22 can be simplified, thereby reducing the redundancy of the tab 22, and reducing costs of the tab 22. In addition, the electrical connection with the tab 22 is implemented through the groove wall of the first accommodating groove 12110, so that a region in which the tab 22 is electrically connected to the terminal 12 may be set to be relatively large. This can not only reduce difficulty of the electrical connection, but also improve reliability and stability of the electrical connection, thereby improving performance of the battery cell 10.

In addition, because the electrical connection position between the tab 22 and the terminal 12 is located in the first accommodating groove 12110, this can not only prevent the electrical connection position from protruding from the outside of the terminal 12 and occupying space outside the terminal 12, but also enable the electrical connection position to be protected by the terminal 12, thereby improving the reliability and the stability of the electrical connection between the tab 22 and the terminal 12.

In addition, in the embodiments of the present application, the first end wall 12111 is constructed as a closed structure in which a via hole 12130 is not provided, so that the first accommodating groove 12110 is isolated from external space of the housing 11, thereby reducing a problem that the electrolyte solution inside the housing 11 leaks from the first accommodating groove 12110.

Referring to FIG. 5 and FIG. 14 again, in some optional embodiments, a partial shape of the tab 22 matches a partial shape of the first end wall 12111, and the tab 22 is attached to and electrically connected to the first end wall 12111, so that an electrical connection position between the tab 22 and the first end wall 12111 extends in a length direction or a width direction of the first end wall 12111. For example, when the first end wall 12111 is planar, a part of the tab 22 may also be planar and attached to the first end wall 12111, and an electrical connection, for example, welding, is performed on an attached position. Therefore, an area of the electrical connection can be improved, and the reliability and the stability of the electrical connection can be improved.

In addition, when the electrical connection between the tab 22 and the first end wall 12111 is welding, because the first end wall 12111 is located on the side of the first accommodating groove 12110 away from the active material coating portion 21, it is convenient to perform a welding operation. For example, welding may be performed on the side of the terminal 12 away from the active material coating portion 21.

It should be noted that, a shape of the first end wall 12111 is not limited, and may be, for example, a flat plate shape or an arc-shaped plate shape. When the first end wall 12111 is a flat plate-shaped structure, the first end wall 12111 and the axial direction R of the terminal 12 are arranged at an angle. For example, the first end wall 12111 may be a flat plate-shaped structure perpendicular to the axial direction R of the terminal 12. For another example, the first end wall 12111 may alternatively be an inclined plate-shaped structure not perpendicular to the axial direction R of the terminal 12. However, an inclined direction is not limited.

Certainly, in other embodiments of the present application, the electrical connection position between the tab 22 and the first end wall 12111 may alternatively not extend in the length direction or the width direction of the first end wall 12111, for example, may alternatively be a plurality of discrete points. For example, the tab 22 has a plurality of portions arranged at intervals, and the plurality of portions are respectively welded to the first end wall 12111. Details are not described herein again.

Referring to FIG. 15, FIG. 15 is a partial cross-sectional view of a battery cell 10 according to some embodiments of the present application. When the tab 22 is electrically connected to the first end wall 12111, a first sink groove 12112 may be provided on the first end wall 12111, and a sinking direction of the first sink groove 12112 is a direction away from the active material coating portion 21. The electrical connection position between the tab 22 and the first end wall 12111 is at least partially located in the first sink groove 12112. For example, the tab 22 may be at least partially arranged in the first sink groove 12112 and connected to a portion of the first end wall 12111 that is configured to define the first sink groove 12112.

In the foregoing technical solution, the electrical connection position of the tab 22 may be pre-positioned and limited through the first sink groove 12112. This not only helps find a correct position to implement the electrical connection and improve the production efficiency, but also helps improve the stability and the reliability of the tab 22 and improve the stability and the reliability of the battery cell 10 during charging and discharging. In addition, the first sink groove 12112 is provided on the first end wall 12111, so that a partial wall thickness of the first end wall 12111 can be partially thinned. This not only helps facilitate welding, but also helps reduce the weight of the terminal 12, thereby improving the gravimetric energy density of the battery cell 10.

Referring to FIG. 14 and FIG. 15 again, in the embodiments of the present application, a first groove 126 may be further provided on the terminal 12 according to a requirement. The first groove 126 is located on the side of the terminal 12 away from the active material coating portion 21, that is, a surface on the side of the terminal 12 away from the active material coating portion 21 is a terminal outer end surface 123, and a notch of the first groove 126 is formed on the terminal outer end surface 123.

It may be understood that, the first groove 126 is a groove body, and the groove body is of a groove-shaped structure having a specific depth. In addition, when the terminal 12 is arranged on an upper end wall of the housing 11, and the terminal outer end surface 123 is an upper surface of the terminal 12, the first groove 126 is formed as a first groove 126 in which the notch opens upwardly and a groove wall is recessed downwardly (that is, is recessed toward the electrode assembly 2). For another example, when the terminal 12 is arranged on a lower end wall of the housing 11, and the terminal outer end surface 123 is a lower surface of the terminal 12, the first groove 126 is formed as a first groove 126 in which the notch opens downwardly and a groove wall is recessed upwardly (that is, is recessed away from the electrode assembly 2).

In the foregoing technical solution, the first groove 126 is provided on the terminal 12 to further reduce the weight of the terminal 12, to improve the gravimetric energy density of the battery cell 10 and the battery 100. In addition, the first groove 126 is located on an outer side of the terminal 12, that is, opens toward a side of the terminal 12 away from the interior of the housing 11. Structural parts that electrically connect various battery cells 10 in the battery 100 can be accommodated or mounted in the first groove 126, to fully use the space inside the terminal 12 and improve space utilization and the volume energy density of the battery 100.

In addition, because the terminal 12 has both the first accommodating groove 12110 and the first groove 126, the first groove 126 is located on the side of the first accommodating groove 12110 away from the active material coating portion 21, and the first groove 126 opens in a direction away from the first accommodating groove 12110, so that laser welding is performed on the tab 22 and the first end wall 12111 through the first groove 126 from the outer side of the terminal 12, namely, the side of the terminal 12 away from the active material coating portion 21, and the tab 22 is electrically connected to the terminal 12 through external welding. In other words, through the foregoing structural arrangement, external welding can be performed on the terminal 12 and the tab 22 through the first groove 126, to help process and manufacture the battery cell 10 and reduce processing and manufacturing costs.

Further, to conveniently and effectively perform welding on the tab 22 and the groove wall of the first accommodating groove 12110 through the first groove 126 and improve reliability of welding of the tab 22 and the groove wall of the first accommodating groove 12110, in the embodiments of the present application, a portion between the first groove 126 and the first accommodating groove 12110 may be laser-welded to the tab 22, that is, a spacer portion 127 shown in FIG. 15 is laser-welded to the tab 22, to implement an electrical connection between the electrode assembly 2 and the terminal 12. The spacer portion 127 of the terminal 12 located between the first groove 126 and the first accommodating groove 12110 has a relatively thin thickness. The spacer portion 127 isolates the first groove 126 from the first accommodating groove 12110, and a wall surface on a side of the spacer portion 127 close to the active material coating portion 21 may be used as the first end wall 12111. When the tab 22 and the first end wall 12111 need to be welded, because the spacer portion 127 has the relatively thin thickness, the tab 22 and the first end wall 12111 are welded through the first groove 126, thereby improving convenience and reliability of welding.

Referring to FIG. 14 again, further, the battery cell 10 may further include a groove cover 7. The groove cover 7 is arranged on the terminal 12 and covers the notch of the first groove 126. In the foregoing technical solution, the groove cover 7 covering the first groove 126 is arranged, so that the terminal 12 may be indirectly electrically connected to the bus component through the groove cover 7. A position and a structure of the groove cover 7 may be arranged, so that an electrical connection between the groove cover 7 and the bus component is more convenient and an electrical connection area is larger. Therefore, the groove cover 7 is arranged, so that adjacent battery cells 10 in the battery 100 can be electrically connected. In addition, because an electrical connection position between battery cells 10 is located at the groove cover 7, the electrical connection position can be isolated from the electrical connection position between the tab 22 and the terminal 12 through the first groove 126 with less interference, thereby further improving the stability and the reliability of the battery cell 10.

For example, referring to FIG. 16, FIG. 16 is a partial cross-sectional view of a battery cell 10 according to some embodiments of the present application. The accommodating portion 121 may alternatively be set to include a second accommodating groove 12120. A surface on a side of the terminal 12 away from the active material coating portion 21 is a terminal outer end surface 123. A notch of the second accommodating groove 12120 is formed on the terminal outer end surface 123. The second accommodating groove 12120 is in communication with the interior of the housing 11 through the via hole 12130. The tab 22 passes through the via hole 12130 and is at least partially accommodated in the second accommodating groove 12120.

It may be understood that, the second accommodating groove 12120 is a groove body, and the groove body is of a groove-shaped structure having a specific depth. For example, when the terminal 12 is arranged on an upper end wall of the housing 11, and the terminal outer end surface 123 is an upper surface of the terminal 12, the second accommodating groove 12120 is formed as an accommodating groove in which the notch opens upwardly and a groove wall is recessed downwardly. For another example, when the terminal 12 is arranged on a lower end wall of the housing 11, and the terminal outer end surface 123 is a lower surface of the terminal 12, the second accommodating groove 12120 is formed as an accommodating groove in which the notch opens downwardly and a groove wall is recessed upwardly.

In the foregoing technical solution, referring to FIG. 16 again, the second accommodating groove 12120 is provided on the terminal 12 to reduce the weight of the terminal 12 to a certain extent, to improve the gravimetric energy density of the battery cell 10 and the battery 100. In addition, because the notch of the second accommodating groove 12120 is formed on the terminal outer end surface 123, and the terminal outer end surface 123 is the surface on the side of the terminal 12 away from the active material coating portion 21, the second accommodating groove 12120 may open in a direction away from the active material coating portion 21. In this way, when the tab 22 is at least partially accommodated in the second accommodating groove 12120, the tab 22 can be easily accommodated and arranged through the notch of the second accommodating groove 12120, and an electrical connection operation and the like may be easily performed on the tab 22 and the terminal 12 through the notch of the second accommodating groove 12120, thereby reducing production difficulty of the battery cell 10, and improving production efficiency of the battery cell 10.

In addition, because the second accommodating groove 12120 can be in communication with the interior of the housing 11 through the via hole 12130, the second accommodating groove 12120 may be further used as a buffer and temporary storage structure for the electrolyte solution, so that the housing 11 can accommodate more electrolyte solutions. Because the electrolyte solution is consumed during charging and discharging of the battery cell 10, when there are more electrolyte solutions, service life of the battery cell 10 can be prolonged. Because the second accommodating groove 12120 can be in communication with the interior of the housing 11 through the via hole 12130, the second accommodating groove 12120 may also be used as an accommodating and buffer structure for gas generated inside the electrode assembly 2, to reduce expansion of the battery cell 10 and improve the reliability and the stability of the battery cell 10.

It should be noted that, when the accommodating portion 121 has the second accommodating groove 12120, and the tab 22 passes through the via hole 12130 and is at least partially accommodated in the second accommodating groove 12120, the electrical connection position between the tab 22 and the terminal 12 is not limited. For example, when the tab 22 passes through the via hole 12130 and is at least partially accommodated in the second accommodating groove 12120, in the embodiments of the present application, the electrical connection position between the tab 22 and the terminal 12 is located on a hole wall of the via hole 12130 formed on the terminal 12.

In the foregoing technical solution, the electrical connection position between the tab 22 and the terminal 12 is arranged on the hole wall of the via hole 12130, so that an electrical connection operation is conveniently performed on the tab 22 and the terminal 12 through the second accommodating groove 12120. In addition, when an electrical connection area between the tab 22 and the terminal 12 is relatively large, the via hole 12130 can be sealed through the electrical connection between the tab 22 and the terminal 12, thereby reducing sealing costs, reducing leakage of the electrolyte solution, and reducing sealing parts.

Specifically, the tab 22 and the hole wall of the via hole 12130 may be welded at a position at which the via hole 12130 is connected to the second accommodating groove 12120, and an operation is convenient. In addition, a weld mark may be controlled, and the via hole 12130 is sealed through the weld mark and the tab 22, to alleviate a problem that the electrolyte solution in the housing 11 leaks from the via hole 12130.

For another example, when the tab 22 passes through the via hole 12130 and is at least partially accommodated in the second accommodating groove 12120, in some other embodiments of the present application, the electrical connection position between the tab 22 and the terminal 12 may alternatively be located on a groove wall of the second accommodating groove 12120 formed on the terminal 12. This facilitates the electrical connection operation. For example, when the tab 22 and the groove wall of the second accommodating groove 12120 formed on the terminal 12 are welded, the following problem can be alleviated: conductive particles generated through welding enter the housing 11, causing a short circuit.

Referring to FIG. 16 again, the terminal 12 includes a second end wall 12121 and a second side wall 12123. The second end wall 12121 is located on a side of the second side wall 12123 close to the active material coating portion 21. The second end wall 12121 and the second side wall 12123 enclose the second accommodating groove 12120. The via hole 12130 is provided on the second end wall 12121. The electrical connection position between the tab 22 and the terminal 12 is located on the second end wall 12121 and/or located on the second side wall 12123.

More specifically, the electrical connection may be formed between the tab 22 and the terminal 12 through welding. Therefore, a welding position is the electrical connection position between the tab 22 and the terminal 12. In other embodiments of the present application, instead of welding, the tab 22 and the terminal 12 may be electrically connected in another manner, for example, a manner of arranging a conductive adhesive or a conductive nail. Details are not described herein again.

For ease of description, descriptions are provided below by using an example in which the tab 22 is electrically connected to the terminal 12 through welding, and the welding position is the electrical connection position between the tab 22 and the terminal 12. For example, in some embodiments, the electrical connection position between the tab 22 and the terminal 12 is located on the second end wall 12121 and/or the second side wall 12123. The tab 22 may be welded to at least one of the second end wall 12121 and the second side wall 12123.

In the foregoing technical solution, the electrical connection position between the tab 22 and the terminal 12 is arranged on at least one of the second end wall 12121 and the second side wall 12123, so that the second accommodating groove 12120 has a function of accommodating at least a part of the tab 22, and the groove wall of the second accommodating groove 12120 further has a function of implementing the electrical connection with the tab 22. In this way, a structure of the terminal 12 can be simplified, thereby facilitating processing of the terminal 12. In addition, because the via hole 12130 is provided on the second end wall 12121, the tab 22 conveniently extends into the second accommodating groove 12120 through the via hole 12130. In this way, a structure of the tab 22 can be simplified, thereby reducing redundancy of the tab 22, and reducing costs of the tab 22. In addition, in an opening direction of the notch of the second accommodating groove 12120, an electrical connection operation may be easily performed on the tab 22 and the groove wall of the second accommodating groove 12120 through the notch of the second accommodating groove 12120, so that difficulty of the electrical connection can be reduced. In addition, the electrical connection with the tab 22 is implemented through the groove wall of the second accommodating groove 12120, so that a region in which the tab 22 is electrically connected to the terminal 12 may be set to be relatively large, and reliability and stability of the electrical connection can be improved, thereby improving performance of the battery cell 10.

In addition, because the electrical connection position between the tab 22 and the terminal 12 is located in the second accommodating groove 12120, this can not only prevent the electrical connection position from protruding from the outside of the terminal 12 and occupying space outside the terminal 12, but also enable the electrical connection position to be protected by the terminal 12, thereby improving the reliability and the stability of the electrical connection between the tab 22 and the terminal 12.

Referring to FIG. 16 again, in some embodiments, a partial shape of the tab 22 matches a partial shape of the second end wall 12121, and the tab 22 is attached to and electrically connected to the second end wall 12121, so that an electrical connection position between the tab 22 and the second end wall 12121 extends in a length direction or a width direction of the second end wall 12121. For example, when the second end wall 12121 is planar, a part of the tab 22 may also be planar and attached to the second end wall 12121, and an electrical connection, for example, welding, is performed on an attached position. Therefore, an area of the electrical connection can be improved, and the reliability and the stability of the electrical connection can be improved.

It should be noted that, a shape of the second end wall 12121 is not limited, and may be, for example, a flat plate shape or an arc-shaped plate shape. When the second end wall 12121 is a flat plate-shaped structure, the second end wall 12121 and an axial direction R of the terminal 12 are arranged at an angle. For example, the second end wall 12121 may be a flat plate-shaped structure perpendicular to the axial direction R of the terminal 12. For another example, the second end wall 12121 may alternatively be an inclined plate-shaped structure not perpendicular to the axial direction R of the terminal 12. However, an inclined direction is not limited.

For example, referring to FIG. 16 again, when the second end wall 12121 is a flat plate-shaped structure, an angle θ between the second end wall 12121 and the axial direction R of the terminal 12 is equal to 90°. In other words, in a direction from the via hole 12130 to the second side wall 12123, the second end wall 12121 and the active material coating portion 21 are equally spaced. Therefore, the tab 22 and the second end wall 12121 are conveniently welded.

For another example, the angle θ between the second end wall 12121 and the axial direction R of the terminal 12 is greater than 90°. In other words, in the direction from the via hole 12130 to the second side wall 12123, the second end wall 12121 obliquely extends in a direction close to the active material coating portion 21. Therefore, an extending distance of the tab 22 along the second end wall 12121 may be increased, to improve the reliability of the electrical connection. For example, the angle θ between the second end wall 12121 and the axial direction R of the terminal 12 may range from 90° to 145°, for example, may be 100°, 110°, 120°, 130°, or 140°. The second end wall 12121 can be easily processed and is conveniently electrically connected to the tab 22. In addition, the space in the terminal 12 can be relatively fully used to accommodate the tab 22.

For another example, the angle θ between the second end wall 12121 and the axial direction R of the terminal 12 is less than 90°. In other words, in the direction from the via hole 12130 to the second side wall 12123, the second end wall 12121 obliquely extends in a direction away from the active material coating portion 21.

Therefore, an extending distance of the tab 22 along the second end wall 12121 may be increased, to improve the reliability of the electrical connection. For example, the angle θ between the second end wall 12121 and the axial direction R of the terminal 12 may range from 45° to 90°, for example, may be 50°, 60°, 70°, or 80°. The second end wall 12121 can be easily processed and is conveniently electrically connected to the tab 22. In addition, the space in the terminal 12 can be relatively fully used to accommodate the tab 22.

Certainly, the present application is not limited thereto. In other embodiments of the present application, the electrical connection position between the tab 22 and the second end wall 12121 may alternatively not extend in the length direction or the width direction of the second end wall 12121, and may alternatively be a plurality of discrete points. For example, the tab 22 has a plurality of portions arranged at intervals, and the plurality of portions are respectively welded to the second end wall 12121. Details are not described herein again.

Referring to FIG. 16 again, and further referring to FIG. 17, FIG. 17 is a partial cross-sectional view of a battery cell 10 according to some embodiments of the present application. Regardless of a specific value of the angle θ between the second end wall 12121 and the axial direction R of the terminal 12, in the embodiments of the present application, when the tab 22 is electrically connected to the second end wall 12121, a second sink groove 12122 may be provided on the second end wall 12121 according to a requirement. The second sink groove 12122 is a groove formed by a part of the second end wall 12121 sinking toward an end close to the active material coating portion 21. The electrical connection position between the tab 22 and the second end wall 12121 is at least partially located in the second sink groove 12122.

In the foregoing technical solution, a shape of a part of the tab 22 located in the second sink groove 12122 is set to match a shape of the second sink groove 12122, and the part is attached to and electrically connected to the second sink groove 12122. The electrical connection position of the tab 22 may be pre-positioned and limited through the second sink groove 12122. This not only helps find a correct position to implement the electrical connection and improve the production efficiency, but also helps improve the stability and the reliability of the electrical connection position, to improve stability and reliability of charging and discharging operations of the battery cell 10.

Referring to FIG. 17 again, in the embodiments of the present application, a connection manner between the terminal 12 and the housing 11 is not limited. For example, the connection manner may be welding, or may be riveting. For example, when the terminal 12 matches the housing 11 through riveting, a mounting hole 113 is provided on the housing 11, and the terminal 12 is riveted and mounted at the mounting hole 113. Certainly, it may be understood that, when the terminal 12 matches the housing 11 through welding or in another manner, the mounting hole 113 may alternatively be provided on the housing 11, so that the terminal 12 is mounted at the mounting hole 113.

Optionally, referring to FIG. 16 again, the second accommodating groove 12120 may be provided corresponding to a position of the mounting hole 113. Alternatively, on a projection surface perpendicular to the axial direction R of the terminal 12, an orthographic projection of the second accommodating groove 12120 is located within a range of an orthographic projection of the mounting hole 113, so that the second accommodating groove 12120 may have a relatively large depth, to accommodate more tabs 22, thereby reducing the space occupied by the tab 22 in the housing 11 to a larger extent.

In some embodiments, referring to FIG. 16 again, when the mounting hole 113 is provided on the housing 11, and the terminal 12 is mounted in the mounting hole 113, in the axial direction R of the terminal 12, a depth H3 of the second accommodating groove 12120 is greater than or equal to a smallest distance H4 between the terminal outer end surface 123 and the mounting hole 113.

It should be noted that, a specific shape of the second accommodating groove 12120 is not limited, and may be a regular shape or may be an irregular shape. For example, the second accommodating groove 12120 is a cylindrical groove whose cross section is a rectangular section, an elliptical section, a racetrack-shaped section, or the like, is a trapezoidal groove whose cross section is rectangular and whose section size is gradually changed, is a hemispherical groove whose cross section is circular and whose section size is gradually changed, is an elliptical spherical groove whose cross section is elliptical and whose section size is gradually changed, or the like. It should be noted that, the racetrack shape described in this specification is a shape in which two short sides of a rectangle are replaced with convex curves.

Therefore, the depth H3 of the second accommodating groove 12120 is a largest depth of the second accommodating groove 12120 in the axial direction R of the terminal 12. Because in the axial direction R of the terminal 12, the depth H3 of the second accommodating groove 12120 is greater than or equal to the smallest distance H4 between the terminal outer end surface 123 and the mounting hole 113, a volume of the terminal 12 can be fully used. In this way, the second accommodating groove 12120 has a relatively large depth, to help accommodate more tabs 22, thereby reducing the space occupied by the tab 22 in the housing 11 to a larger extent, further improving the energy density of the battery cell 10, and further reducing the redundancy of the tab 22 in the housing 11. In addition, because the second accommodating groove 12120 has the relatively large depth, the second accommodating groove 12120 can also accommodate gas generated by the electrode assembly 2, thereby improving the reliability and the stability of the battery cell 10, and the second accommodating groove 12120 can further accommodate more electrolyte solutions, thereby improving the service life of the battery cell 10.

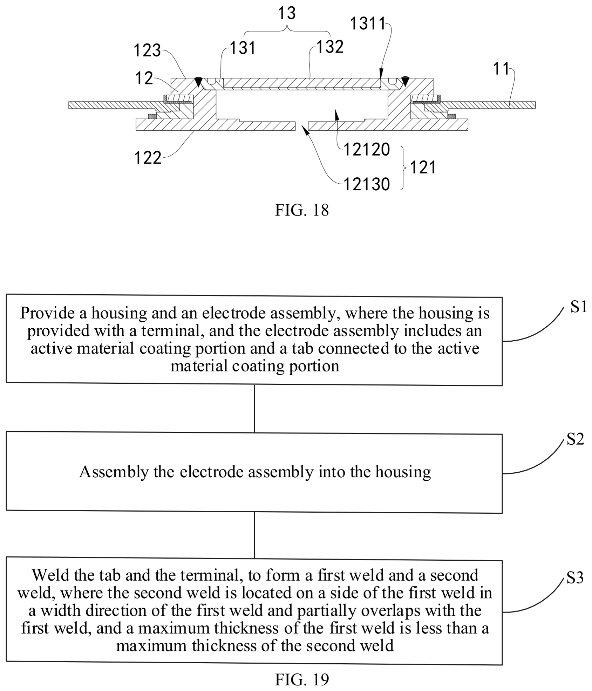

Referring to FIG. 17, and further referring to FIG. 18, FIG. 18 is a partial cross-sectional view of a battery cell 10 according to some embodiments of the present application. In the embodiments of the present application, when the accommodating portion 121 has the second accommodating groove 12120 according to any one of the foregoing embodiments, optionally, the battery cell 10 may further include a cover plate 13. The cover plate 13 matches the terminal 12 and closes the notch of the second accommodating groove 12120. The cover plate 13 is electrically connected to the terminal 12.

In the foregoing technical solution, the cover plate 13 is arranged to close the notch of the second accommodating groove 12120, so that leakage of the electrolyte solution in the housing 11 out of the notch of the second accommodating groove 12120 may be reduced. In addition, because the cover plate 13 closes the notch of the second accommodating groove 12120 and is electrically connected to the terminal 12, the terminal 12 is indirectly electrically connected to the bus component easily through the cover plate 13, thereby helping increase a connection area of the electrical connection position and further helping reduce a resistance at the electrical connection position.

It should be noted that, a matching manner and a matching position between the cover plate 13 and the terminal 12 are not limited, provided that the cover plate 13 can close the notch of the second accommodating groove 12120. For example, in some embodiments, the cover plate 13 may be welded to the terminal 12. During processing, the tab 22 may first pass through the via hole 12130 and may be welded to the groove wall of the second accommodating groove 12120, and then the cover plate 13 is welded to the terminal 12, to close the notch of the second accommodating groove 12120.

It should also be noted that, a specific constitution of the cover plate 13 is not limited. For example, in some optional embodiments, referring to FIG. 18, the cover plate 13 includes a first conductive member 131 and a second conductive member 132 that are made of different materials. The first conductive member 131 matches and is electrically connected to the terminal 12, and the second conductive member 132 matches and is electrically connected to the first conductive member 131.

In the foregoing technical solution, the cover plate 13 is set to a composite form. The material of the first conductive member 131 is set to be the same as the material of the terminal 12, so that the first conductive member 131 is electrically connected to the terminal 12. For example, the first conductive member 131 and the terminal 12 can be easily connected reliably and stably through welding. In addition, because the materials of the second conductive member 132 and the first conductive member 131 are different, the second conductive member 132 is electrically connected to a bus component whose material is different from that of the terminal 12. For example, the second conductive member 132 can be easily connected reliably and stably to a bus component whose material is the same as that of the second conductive member 132 through welding.

For example, when the terminal 12 is a negative terminal 12, the terminal 12 is a copper terminal, and the bus component is an aluminum sheet. In this case, the first conductive member 131 may be set to be made of a copper material, and the second conductive member 132 is set to be made of an aluminum material. In this case, the terminal 12 and the first conductive member 131 that are of the same material can be effectively welded, and the second conductive member 132 and the bus component that are of the same material can be effectively welded, so that the terminal 12 can be indirectly electrically connected to the bus component through the cover plate 13 effectively. In addition, the terminal 12 and the first conductive member 131 are welded between copper materials, the fluidity is good, and cracks are not easily generated, thereby helping improve a sealing effect at a position of the welding.

Referring to FIG. 18 again, in some optional examples, the first conductive member 131 is located between the second accommodating groove 12120 and the second conductive member 132. In the foregoing technical solution, because the first conductive member 131 is located between the second accommodating groove 12120 and the second conductive member 132, the second accommodating groove 12120 and the second conductive member 132 may be separated. In this way, when the electrolyte solution in the housing 11 enters the second accommodating groove 12120 from the via hole 12130, the first conductive member 131 may be used to reduce contact between the part of the electrolyte solution and the second conductive member 132, to resolve a problem that the electrolyte solution causes corrosion to the second conductive member 132.

It should be noted that a manner of matching between the first conductive member 131 and the second conductive member 132 is not limited. For example, in some embodiments, referring to FIG. 18, a second groove 1311 is provided on the first conductive member 131, the second conductive member 132 is embedded in the second groove 1311, and a notch of the second groove 1311 is formed on a surface on a side of the first conductive member 131 away from the second accommodating groove 12120, so that the second conductive member 132 is exposed from the notch of the second groove 1311. Alternatively, in other embodiments, a connection manner between the first conductive member 131 and the second conductive member 132 may alternatively be a secure connection manner, an engagement manner, or the like.

It should also be noted that, "exposed" in the case that the second conductive member 132 is exposed from the notch of the second groove 1311 means that the first conductive member 131 does not shield the second conductive member 132 at a position of the notch of the second groove 1311, and the second conductive member 132 does not need to protrude from the notch of the second groove 1311. For example, the second conductive member 132 may be flush with the surface on the side of the first conductive member 131 away from the second accommodating groove 12120, or the second conductive member 132 may protrude from the surface on the side of the first conductive member 131 away from the second accommodating groove 12120.

In the foregoing technical solution, the second conductive member 132 is embedded in the first conductive member 131, so that difficulty of assembling the first conductive member 131 and the second conductive member 132 can be reduced, and stability and convenience of matching between the first conductive member 131 and the second conductive member 132 can be improved. In addition, a thickness of the cover plate 13 can be reduced, and space occupied by the cover plate 13 can be reduced, thereby improving the space utilization of the battery cell 10. In addition, in addition, the second conductive member 132 may be exposed, through the notch of the second groove 1311, from the surface on the side of the first conductive member 131 away from the second accommodating groove 12120, so that the second conductive member 132 is electrically connected to the bus component outside the terminal 12.

In addition, because the notch of the second groove 1311 is formed on the surface on the side of the first conductive member 131 away from the second accommodating groove 12120, it indicates that the second groove 1311 opens in a direction away from the active material coating portion 21, so that a part of the first conductive member 131 configured to define a groove wall of the second groove 1311 is located between the second accommodating groove 12120 and the second conductive member 132, to separate the second accommodating groove 12120 and the second conductive member 132, to prevent the electrolyte solution entering the second groove 1311 from being in contact with the second conductive member 132, and reduce leakage of the electrolyte solution.

Certainly, in other embodiments, the cover plate 13 may not be a composite form made of a plurality of materials. For example, in other embodiments of the present application, the entire cover plate 13 may be configured as a non-composite form made of the same material, for example, to adapt to a positive terminal 12. Details are not described herein again.

Referring to FIG. 18 again, the cover plate 13 is further embedded at the notch of the second accommodating groove 12120. In the foregoing technical solution, the cover plate 13 is embedded in the second accommodating groove 12120, so that difficulty of assembling the cover plate 13 and the terminal 12 can be reduced, stability of assembling the cover plate 13 and the terminal 12 and connection reliability and convenience can be improved, and space occupied by the cover plate 13 outside the terminal 12 can be reduced. In addition, because the cover plate 13 is embedded at the notch of the second accommodating groove 12120, the second accommodating groove 12120 can have relatively sufficient space to accommodate the tab 22.

Certainly, in other embodiments of the present application, a manner of matching between the cover plate 13 and the terminal 12 is not limited to being embedded in the second accommodating groove 12120. The cover plate 13 may alternatively cover the terminal 12, that is, directly cover the notch of the second accommodating groove 12120, to facilitate matching with the bus component of the battery 100. This is not limited in the embodiments.

The present application provides a battery 100. The battery 100 includes the battery cell 10 in the foregoing embodiments. In the technical solution of the embodiments of the present application, the foregoing battery cell 10 is used, so that an overcurrent temperature increase can be reduced, and a probability of occurrence of a thermal runaway can be reduced, thereby improving reliability of the battery 100.

The present application provides a power consuming apparatus 1000. The power consuming apparatus 1000 includes the battery 100 in the foregoing embodiments. In the technical solution of the embodiments of the present application, the foregoing battery 100 is used, so that reliability of the power consuming apparatus 1000 can be improved.

Referring to FIG. 19, FIG. 19 is a flowchart of preparing a battery cell according to some embodiments of the present application. The present application provides a method for preparing a battery cell, including the following steps:
S1: Provide a housing and an electrode assembly.
   A housing 11 is provided with a terminal 12. An electrode assembly 2 includes an active material coating portion 21 and a tab 22. The tab 22 is connected to the active material coating portion 21.
S2: Assembly the electrode assembly into the housing.
S3: Weld the tab and the terminal, to form a first weld and a second weld.

A second weld 232 is located on a side of a first weld 231 in a width direction of the first weld 231. The second weld 232 partially overlaps with the first weld 231. A maximum thickness of the first weld 231 is less than a maximum thickness of the second weld 232.

In the technical solution of the embodiments of the present application, because an edge of the second weld 232 is prone to undergo a crack to affect connection strength of a weld mark 23, the first weld 231 is formed on a side of the second weld 232 in a width direction of the second weld 232. By using the first weld 231, a probability that a plurality of layers of tab pieces of the tab 22 undergo a weld crack can be effectively reduced, and an overcurrent temperature increase can be reduced, so that a probability that the electrode assembly 2 undergoes a thermal runaway due to an excessively large temperature increase can be reduced. In addition, anti-peeling strength of the weld mark 23 on the tab 22 can be increased, thereby significantly improving reliability of a battery cell 10.

In some embodiments, the second weld 232 is formed after the first weld 231.

Specifically, in a process of welding the tab 22 to the terminal 12, the first weld 231 shown in FIG. 6 and FIG. 7 may be first formed. The first weld 231 is used as a backing weld. The maximum thickness of the first weld 231 is small. That is, a depth of a puddle of the first weld 231 is small. That is, a depth of a puddle of the backing weld is small, and required welding power is small. This can greatly reduce a thermal input in an early stage of welding, thereby reducing thermal contraction of the puddle of the backing weld, and reducing a risk that the plurality of layers of tab pieces of the tab 22 break off.

After the first weld 231 is formed, the second weld 232 shown in FIG. 8 and FIG. 9 is formed. The second weld 232 is used as a main weld. The maximum thickness of the second weld 232 is large. That is, a depth of a puddle of the second weld 232 is large. That is, a depth of a puddle of the main weld is large, and required welding power is large. Specifically, when the main weld is welded, an edge of the puddle of the main weld falls in the puddle of the backing weld that has solidified into a solid structure. In this case, when the puddle of the main welds contracts, a plurality of layers of tab pieces at the backing puddle is not affected. This can reduce a proportion of a thermal crack undergone by the plurality of layers of tab pieces. In addition, welding of the main weld herein can be equivalent to welding of a solid adapting piece in the related technology, and can improve reliability of an electrical connection between the terminal 12 and the tab 22.

In the foregoing technical solution, in the process of welding the tab 22 to the terminal 12, the first weld 231 is first formed, and then the second weld 232 is formed. Because the maximum thickness of the first weld 231 first formed is less than the maximum thickness of the second weld 232 then formed, welding power when the first weld 231 is formed is less than welding power when the second weld 232 is formed, and welding at large power is gradually transitioned to welding at small power. In this way, the probability that the plurality of layers of tab pieces of the tab 22 undergo the weld crack can be effectively reduced, and the overcurrent temperature increase can be reduced, so that the probability that the electrode assembly 2 undergoes the thermal runaway due to the excessively large temperature increase can be reduced. In addition, the anti-peeling strength of the weld mark 23 on the tab 22 can be increased, thereby significantly improving the reliability of the battery cell 10.

In some embodiments, a third weld 233 is further formed when the tab 22 and the terminal 12 are welded, and the third weld 233 is formed after the first weld 231.

Specifically, in the process of welding the tab 22 to the terminal 12, the first weld 231 shown in FIG. 6 and FIG. 7 may be first formed, then the second weld 232 shown in FIG. 8 and FIG. 9 is formed, and the third weld 233 shown in FIG. 11 and FIG. 10 is finally formed. Alternatively, the first weld 231 shown in FIG. 6 and FIG. 7 may be first formed, then the third weld 233 shown in FIG. 11 and FIG. 10 is formed, and the second weld 232 shown in FIG. 8 and FIG. 9 is finally formed. Alternatively, the first weld 231 shown in FIG. 6 and FIG. 7 may be first formed, and then the second weld 232 shown in FIG. 8 and FIG. 9 and the third weld 233 shown in FIG. 11 and FIG. 10 are simultaneously formed.

The third weld 233 and the second weld 232 are respectively located on two opposite sides of the first weld 231 in the width direction of the first weld 231. The third weld 233 partially overlaps with the first weld 231. A thickness of the third weld 233 is less than a thickness of the tab 22.

The third weld 233 is used as a repair weld. A maximum thickness of the repair weld is small. That is, a depth of a puddle of the repair weld is small, and required welding power is small. This can reduce a thermal input during welding, thereby reducing thermal contraction of the puddle of the repair weld, and reducing the risk that the plurality of layers of tab pieces of the tab 22 break off.

Therefore, in the foregoing technical solution, the third weld 233 is arranged, so that a micro weld crack of the plurality of layers of tab pieces at an edge of the first weld 231 can be repaired, and strength of the welding connection between the tab 22 and the terminal 12 can also be greatly improved.

According to some embodiments of the present application, a method for preparing a battery cell 10 is provided.

Step 1: First pair tabs 22 of an electrode assembly 2. After the tabs 22 are paired, a plurality of tab pieces of the tab 22 are pre-welded together through ultrasonic welding, to reduce an inter-layer gap and make a lofty tab 22 form a sheet material having particular stiffness.

Step 2: Assemble the tab 22 on a terminal 12. The tab 22 may be pressed to be adhered to the terminal 12 through process assembly, and then the tab 22 and the terminal 12 are welded to form a first weld 231. Welding power for forming the first weld 231 needs to be used to just perform welding through the plurality of layers of tab pieces of the tab 22.

Step 3: Weld a second weld 232. A weld position of the second weld 232 requires that an edge of the second weld 232 falls in a puddle of the first weld 231.

Step 4: Weld a third weld 233. The third weld 233 is located on an edge on a side of the first weld 231 away from the second weld 232. A depth of a puddle of the third weld 233 is 50% to 80% of a thickness of the tab 22 after the pre-welding.

According to some embodiments of the present application, a battery cell 10 is provided.

The battery cell 10 includes a housing 11 and an electrode assembly 2. The housing 11 includes a housing cover 112 and a housing body 111 provided with an opening 1110. The housing cover 112 covers the opening 1110 of the housing body 111. A terminal 12 is arranged on a wall of the housing body 111 opposite to the opening 1110. The electrode assembly 2 includes an active material coating portion and a tab 22. The tab 22 is connected to the active material coating portion 21. The active material coating portion 21 of the electrode assembly 2 is arranged in the housing 11. The tab 22 of the electrode assembly 2 is connected to the terminal 12 through welding to form a weld mark.

The weld mark 23 has a length direction and a width direction. The second weld 232 is located right in the middle of the weld mark 23 in the width direction of the weld mark 23. The first weld 231 is separately provided on the two sides of the second weld 232 in the width direction of the second weld 232, and each first weld 231 overlaps with the second weld 232 in the width direction of the weld mark 23. The third weld 233 is provided on a side of each first weld 231 away from the second weld 232, and each second weld 232 overlaps with the corresponding third weld 233 in the width direction of the weld mark 23, so that a puddle of the weld mark 23 approximately forms a "T" shape.

A ratio of a maximum thickness H1 of the first weld 231 to a thickness H of the tab 22 ranges from 0.8 to 1. A width L1 of the first weld 231 ranges from 0.5 mm to 3.0 mm. a maximum thickness H2 of the second weld 232 is greater than the thickness H of the tab 22. A width L2 of the second weld 232 is greater than twice the width L1 of the first weld 231. A ratio of a maximum thickness H3 of the third weld 233 to the thickness H of the tab 22 ranges from 0.5 to 0.8. A width L3 of the third weld 233 ranges from 0.5 mm to 2.0 mm.

In the foregoing technical solution, after the welding is completed, the puddle of the weld mark 23 formed by the first weld 231, the second weld 232, and the third weld 233 forms the "T" shape. When the tab 22 is peeled or pulled, peeling force undergone by a plurality of layers of tab pieces at a part connected to the puddle of the third weld 233 may be converted into shear force, thereby greatly improving strength of the welding connection between the tab 22 and the terminal 12.

Finally, it should be noted that, the foregoing embodiments are merely used for describing the technical solutions of the present application, but are not intended to limit the present application. It should be understood by a person of ordinary skill in the art that although the present application has been described in detail with reference to the foregoing embodiments, modifications can be made to the technical solutions described in the foregoing embodiments, or equivalent replacements can be made to some or all of the technical features, and these modifications or replacements will not cause the essence of corresponding technical solutions to depart from the scope of the technical solutions in the embodiments of the present application, and should fall within the scope of the claims and the specification of the present application. Especially, as long as there is no structural conflict, the various technical features mentioned in each embodiment can be combined in any way. The present application is not limited to the particular embodiments disclosed herein, but includes all technical solutions that fall within the scope of the claims.

## Claims

1. A battery cell, comprising:
a housing, provided with a terminal;
an electrode assembly, arranged in the housing, wherein:
the electrode assembly comprises an active material coating portion and a tab connected to the active material coating portion, and the tab and the terminal are connected through welding to form a weld mark; and
the weld mark comprises a first weld and a second weld, the second weld is located on a side of the first weld in a width direction of the first weld and partially overlaps with the first weld, and a maximum thickness of the first weld is less than a maximum thickness of the second weld.

2. The battery cell according to claim 1, wherein a ratio of the maximum thickness of the first weld to a thickness of the tab ranges from 0.8 to 1.2.

3. The battery cell according to claim 2, wherein the ratio of the maximum thickness of the first weld to the thickness of the tab ranges from 0.8 to 1.

4. The battery cell according to any one of claims 1 to 3, wherein a width of the first weld ranges from 0.5 mm to 3.0 mm.

5. The battery cell according to any one of claims 1 to 4, wherein the maximum thickness of the second weld is greater than a thickness of the tab, to cause the second weld to pass through the tab and the first weld in a thickness direction of the second weld and extend into the terminal.

6. The battery cell according to any one of claims 1 to 5, wherein a width of the second weld is greater than twice a width of the first weld.

7. The battery cell according to any one of claims 1 to 6, wherein the weld mark further comprises a third weld, the third weld and the second weld are respectively located on two opposite sides of the first weld in the width direction of the first weld, the third weld partially overlaps with the first weld, and a maximum thickness of the third weld is less than a thickness of the tab.

8. The battery cell according to claim 7, wherein a ratio of the maximum thickness of the third weld to the thickness of the tab ranges from 0.5 to 0.8.

9. The battery cell according to claim 7 or 8, wherein the maximum thickness of the third weld is less than the maximum thickness of the first weld.

10. The battery cell according to any one of claims 7 to 9, wherein a width of the third weld ranges from 0.5 mm to 2.0 mm.

11. The battery cell according to any one of claims 7 to 10, wherein each of the first weld, the second weld, and the third weld comprises a plurality of weld parts, and the plurality of weld parts are arranged and connected in a length direction of the corresponding weld.

12. The battery cell according to any one of claims 7 to 11, wherein the first weld is provided on two opposite sides of the second weld in a width direction of the second weld, and the second weld and the third weld are respectively provided on two opposite sides of each first weld in the width direction of the first weld.

13. The battery cell according to any one of claims 1 to 12, wherein an accommodating portion is provided on the terminal, and the tab at least partially extends into the accommodating portion to be connected to the terminal through welding.

14. The battery cell according to claim 13, wherein the accommodating portion comprises a first accommodating groove, a surface on a side of the terminal facing the active material coating portion is a terminal inner end surface, a notch of the first accommodating groove is formed on the terminal inner end surface, and the tab is at least partially accommodated in the first accommodating groove.

15. The battery cell according to claim 13, wherein the accommodating portion comprises a second accommodating groove, a surface on a side of the terminal away from the active material coating portion is a terminal outer end surface, a notch of the second accommodating groove is formed on the terminal outer end surface, the second accommodating groove is in communication with the interior of the housing through a via hole, and the tab passes through the via hole and is at least partially accommodated in the second accommodating groove.

16. The battery cell according to any one of claims 1 to 15, wherein the housing comprises a housing cover and a housing body provided with an opening, the housing cover covers the opening, and the terminal is arranged on the housing cover and/or a wall of the housing body opposite to the opening.

17. A battery, comprising the battery cell according to any one of claims 1 to 16.

18. A power consuming apparatus, comprising the battery according to claim 17.

19. A method for preparing a battery cell, comprising the following steps:
providing a housing and an electrode assembly, wherein the housing is provided with a terminal, and the electrode assembly comprises an active material coating portion and a tab connected to the active material coating portion;
assembling the electrode assembly into the housing; and
welding the tab and the terminal, to form a first weld and a second weld, wherein the second weld is located on a side of the first weld in a width direction of the first weld and partially overlaps with the first weld, and a maximum thickness of the first weld is less than a maximum thickness of the second weld.

20. The method for preparing a battery cell according to claim 19, wherein the second weld is formed after the first weld.

21. The method for preparing a battery cell according to claim 19, wherein:
a third weld is further formed when the tab and the terminal are welded, and the third weld is formed after the first weld; and
the third weld and the second weld are respectively located on two opposite sides of the first weld in the width direction of the first weld, the third weld partially overlaps with the first weld, and a thickness of the third weld is less than a thickness of the tab.
